# EUROPEAN PATENT APPLICATION

(11) **EP 4 811 882 A1**
(43) Date of publication of application: **23.09.2026**
(21) Application number: 24890836.0
(22) Date of filing: 15.11.2024
(51) Int. Cl.: H04W 52/14

(54) **COMMUNICATION METHOD AND APPARATUS, AND NETWORK DEVICE AND TERMINAL DEVICE**

(30) Priority: 17.11.2023 CN 202311548251
(71) Applicant: Spreadtrum Communications (Shanghai) Co., Ltd., Shanghai 201203 (CN)
(72) Inventor: ZHOU, Huayu, Shanghai 201203 (CN); ZHAO, Sicong, Shanghai 201203 (CN); LEI, Zhenzhu, Shanghai 201203 (CN); PAN, Zhengang, Shanghai 201203 (CN)
(74) Representative: Patentanwälte Ruff, Wilhelm, Beier, Dauster & Partner mbB
(86) International application number: PCT/CN2024/132442
(87) International publication number: WO 2025/103484

(57) **Abstract**

The present application relates to the technical field of communications. Disclosed are a communication method and apparatus, and a network device and a terminal device. The method comprises: a network device sending first configuration information, wherein the first configuration information comprises configuration information of a first common uplink signal/channel and/or configuration information of a first common downlink signal/channel; and correspondingly, a terminal device receiving the first configuration information. It can be learned that in the present application, a first common downlink signal/channel has less sending power consumption, and that a first common uplink signal/channel has less receiving power consumption. Additionally, when a cell (or a network device) is in a first state, a basic cell residence operation is provided for a terminal device by means of the first common downlink signal/channel and/or the first common uplink signal/channel. In addition, by means of first configuration information, a network can configure the first common uplink signal/channel and/or the first common downlink signal/channel.

## Description

This patent application claims priority to the prior application No. 202311548251.9, entitled "COMMUNICATION METHOD AND APPARATUS, AND NETWORK DEVICE AND TERMINAL DEVICE" and filed on November 17, 2023, the entirety of which is incorporated herein by reference.

### TECHNICAL FIELD

This application relates to communication technology, and particularly to a communication method and apparatus, and a network device and a terminal device.

### BACKGROUND

Network power saving (or network energy saving) is a concern for operators and equipment vendors, and is highly beneficial for reducing operating costs and promoting environmental sustainability.

Generally, when the network load is zero, the transmission power consumption of common downlink signals/channels accounts for a significant proportion of the overall transmission power consumption of the network device. Also, reception power consumption of common uplink signals/channels also accounts for a significant proportion of the overall reception power consumption of the network device.

Therefore, to facilitate network power saving, further research is needed on how to reduce the transmission power consumption of common downlink signals/channels and/or the reception power consumption of common uplink signals/channels.

### SUMMARY

This application provides a communication method and apparatus, a network device and a terminal device, aimed at addressing the issue of how to achieve network power saving.

In a first aspect, this application provides a communication method. The communication method comprises:
receiving first configuration information, wherein the first configuration information comprises configuration information for a first common uplink signal/channel and/or configuration information for a first common downlink signal/channel.

It may be seen that, when the network load is zero, the transmission of common downlink signals/channels occupies a significant proportion of transmission power consumption of the network device, and the reception of common uplink signals/channels also occupies a significant proportion of reception power consumption of the network device. Thus, this application intends to reduce transmission power consumption of a common downlink signal/channel and/or reception power consumption of a common uplink signal/channel, so as to achieve network power saving.

To reduce the transmission power consumption of the common downlink signal/channel, in this application, the original common downlink signal/channel is processed such that the processed common downlink signal/channel requires less transmission power consumption than the original common downlink signal/channel. The processed common downlink signal/channel may be referred to as "a first common downlink signal/channel".

Similarly, to reduce the reception power consumption of the common uplink signal/channel, in this application, the original common uplink signal/channel is processed such that the processed common uplink signal/channel requires less reception power consumption than the original common uplink signal/channel. The processed common uplink signal/channel may be referred to as "a first common uplink signal/channel".

Finally, in this application, the network configures the first common uplink signal/channel and/or the first common downlink signal/channel through the first configuration information. Also, a cell (or network device) in a first state supports basic cell camping operations for a terminal device via the first common downlink signal/channel and/or the first common uplink signal/channel.

In a second aspect, this application provides a communication method. The communication method comprises:
transmitting first configuration information, wherein the first configuration information comprises configuration information for a first common uplink signal/channel and/or configuration information for a first common downlink signal/channel.

In a third aspect, this application provides a communication method. The communication method comprises:
receiving indication information;
obtaining second configuration information according to the indication information, wherein the second configuration information comprises configuration information for a second common uplink signal/channel and/or configuration information for a second common downlink signal/channel.

It can be seen that in this application, the indication information may be used to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Also, the terminal device may obtain the second configuration information according to the indication information, which enables the network to configure the second common uplink signal/channel and/or the second common downlink signal/channel via the second configuration information.

In a fourth aspect, this application provides a communication method. The communication method comprises:
transmitting indication information, the indication information being used for obtaining second configuration information, wherein the second configuration information comprises configuration information for a second common uplink signal/channel and/or configuration information for a second common downlink signal/channel

In a fifth aspect, this application provides a communication method. The communication method comprises:
receiving trigger information;
determining activation of second configuration information according to the trigger information, wherein the second configuration information comprises configuration information for a second common uplink signal/channel and/or configuration information for a second common downlink signal/channel.

It can be seen that in this application, the trigger information may be employed to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Thus, the terminal device transmits the second common uplink signal/channel and/or receives the second common downlink signal/channel based on the activation of the second configuration information.

In a sixth aspect, this application provides a communication method. The communication method comprises:
transmitting trigger information, the trigger information being used for determining activation of second configuration information, wherein the second configuration information comprises configuration information for a second common uplink signal/channel and/or configuration information for a second common downlink signal/channel.

In a seventh aspect, this application provides a communication apparatus. The communication apparatus comprises:
a receiving unit configured to receive first configuration information, wherein the first configuration information comprises configuration information for a first common uplink signal/channel and/or configuration information for a first common downlink signal/channel.

In an eighth aspect, this application provides a communication apparatus. The communication apparatus comprises:
a transmitting unit configured to transmit first configuration information, wherein the first configuration information comprises configuration information for a first common uplink signal/channel and/or configuration information for a first common downlink signal/channel.

In a ninth aspect, this application provides a communication apparatus. The communication apparatus comprises:
a receiving unit configured to receive indication information, and obtain second configuration information according to the indication information, wherein the second configuration information comprises configuration information for a second common uplink signal/channel and/or configuration information for a second common downlink signal/channel.

In a tenth aspect, this application provides a communication apparatus. The communication apparatus comprises:
a transmitting unit configured to transmit indication information, the indication information being used for obtaining second configuration information, wherein the second configuration information comprises configuration information for a second common uplink signal/channel and/or configuration information for a second common downlink signal/channel.

In an eleventh aspect, this application provides a communication apparatus. The communication apparatus comprises:
a receiving unit configured to receive trigger information;
a determining unit configured to determine activation of second configuration information according to the trigger information, wherein the second configuration information comprises configuration information for a second common uplink signal/channel and/or configuration information for a second common downlink signal/channel.

In a twelfth aspect, this application provides a communication apparatus. The communication apparatus comprises:
a transmitting unit configured to transmit trigger information, the trigger information being used for determining activation of second configuration information, wherein the second configuration information comprises configuration information for a second common uplink signal/channel and/or configuration information for a second common downlink signal/channel.

In a thirteenth aspect, the steps of the method designed in the above first, third, or fifth aspect are applied in a terminal device.

In a fourteenth aspect, the steps of the method designed in the above second, fourth, or sixth aspect are applied in a network device.

In a fifteenth aspect, this application provides a terminal device comprising: a processor, a memory, and computer programs or instructions stored on the memory, wherein the processor executes the computer programs or instructions to perform the steps of the method designed in the above first, third, or fifth aspect.

In a sixteenth aspect, this application provides a network device comprising: a processor, a memory, and computer programs or instructions stored on the memory, wherein the processor executes the computer programs or instructions to perform the steps of the method designed in the above second, fourth, or sixth aspect.

In a seventeenth aspect, this application provides a chip, comprising a processor and a communication interface, wherein the processor executes the steps of the method designed in any one of the above second to sixth aspects.

In an eighteenth aspect, this application provides a chip module comprising: a transceiver component and a chip, and the chip comprises a processor, wherein the processor executes the steps of the method designed in any one of the above second to sixth aspects.

In a nineteenth aspect, this application provides a computer-readable storage medium storing computer programs or instructions thereon, wherein the computer programs or instructions, when being executed, perform the steps of the method designed in any one of the above second to sixth aspects. For example, the computer programs or instructions are executed by a processor.

In a twentieth aspect, this application provides a computer program product comprising computer programs or instructions, wherein the computer programs or instructions, when being executed, perform the steps of the method designed in any one of the above second to sixth aspects. For example, the computer programs or instructions are executed by a processor.

### BRIEF DESCRIPTION OF THE DRAWINGS

FIG. 1 is a schematic architectural diagram of a communication system according to an embodiment of this application;
FIGs. 2 to 4 are schematic flowcharts of a communication method according to an embodiment of this application;
FIG. 5 is a block diagram illustrating functional units of a communication apparatus according to an embodiment of this application;
FIG. 6 is a block diagram illustrating functional units of another communication apparatus according to an embodiment of this application;
FIG. 7 is a block diagram illustrating functional units of yet another communication apparatus according to an embodiment of this application;
FIG. 8 is a schematic structural diagram of a terminal device according to an embodiment of this application;
FIG. 9 is a schematic structural diagram of a network device according to an embodiment of this application.

### DETAILED DESCRIPTION

It should be understood that the terms "first", "second", etc. involved in the embodiments of this application are used to distinguish different objects and do not indicate a specific sequence. Furthermore, the terms "comprise", "include" and "have" and any variations thereof are intended to cover non-exclusive inclusion. For example, processes, methods, software programs, products or devices that comprise/include a series of steps or units are not limited to the listed steps or units, but also comprise/include other steps or units not listed or inherent to these processes, methods, products, or devices.

The term "embodiment" involved in the embodiments of this application means that, the specific features, structures or characteristics described in combination with the embodiment may be included in at least one embodiment of this application. This term appeared at various locations in the Description does not necessarily refer to the same embodiment, nor to an independent or alternative embodiment mutually exclusive with other embodiments. It should be understood by those skilled in the art, either explicitly or implicitly, that an embodiment described herein may be combined with other embodiments.

The term "and/or" in the embodiments of this application describes a relationship between related objects, representing that there may be three relationships. For example, A and/or B may represent the following three cases: A alone, both A and B, or B alone. A and B may be in forms of singular or plural.

In the embodiments of this application, the character "/" may represent an "or" relationship between the two objects before and after the character. Certainly, the character "/" may also represent an "and" relationship between the two objects before and after the character. For example, A/B may represent the following three cases: A, B, A and B.

In addition, the character "/" may represent a division sign, i.e., performing a division operation. For example, A/B may represent that A is divided by B.

The term "at least one of" or similar terms in the embodiments of this application refer to any combination of items, including a single item or any combination of a plurality of items, meaning one or multiple items, where multiple means two or more. For example, at least one of a, b, or c may represent the following seven cases: a, b, c, a and b, a and c, b and c, and a, b, and c. Each of a, b, and c may be an element or a set containing one or more elements.

The term "equal to" in the embodiments of this application may be used with "greater than", applicable to the technical solution when "greater than" is used, or may be used with "less than", applicable to the technical solution when "less than" is used. When "equal to" is used with "greater than", it is not used with "less than"; and when "equal to" is used with "less than", it is not used with "greater than".

The terms "of", "relevant", "corresponding", 'indicated' involved in the embodiments of this application may sometimes be used interchangeably. It should be pointed out that, the meanings the terms intend to express are consistent when differences among them are not emphasized.

The term "connection" in the embodiments of this application refers to various forms of connection which enables communication between devices, such as direct connection or indirect connection, which is not limited specifically herein.

The term "network" in the embodiments of this application may be expressed as the same concept as the term "system". That is, a communication system is a communication network.

The relevant contents, concepts, meanings, technical problems, technical solutions, beneficial effects, etc. involved in the embodiments of this application are described below.

### I. Communication System, Terminal Device and Network Device

### 1. Communication System

This application may be applied to various communication systems, to meet the requirements of different communication scenarios.

Optionally, this application may be applied to Long Term Evolution (LTE) system, Advanced Long Term Evolution (LTE-A) system, New Radio (NR) system, evolved NR system, LTE-based access to unlicensed spectrum (LTE-U) system, NR-based access to unlicensed spectrum (NR-U) system, Non-Terrestrial Networks (NTN) system, Universal Mobile Telecommunication System (UMTS), 6th-Generation (6G) communication system, etc.

Optionally, this application may be applied to communication scenarios, such as Device to Device (D2D) system, Machine to Machine (M2M) system, Machine Type Communication (MTC), Vehicle to Vehicle (V2V) system, Vehicle to Everything (V2X) system, Narrow Band Internet of Things (NB-IoT) system, passive IoT communication, etc.

Optionally, this application may be applied to scenarios, such as beamforming, carrier aggregation (CA), dual connectivity (DC) or standalone (SA) deployment, etc.

Since various embodiments are described in combination with a terminal device and a network device in this application, the terminal device and the network device involved are introduced specifically below.

### 2. Terminal Device

A terminal device may be a device with transceiver functionality, and may also be referred to as a terminal, a passive device, an IoT device, a user equipment (UE), a remote UE, a relay UE, an access terminal device, a user unit, a user station, a mobile station, a mobile platform, a remote station, a mobile device, a user terminal device, a smart terminal device, a wireless communication device, a user agent, or a user apparatus.

For example, the terminal device may be a mobile phone, a tablet computer (pad), a computer with wireless transceiver capabilities, a virtual reality (VR) terminal device, an augmented reality (AR) terminal device, and a wireless terminal device in industrial control, a wireless terminal device in unmanned autonomous driving, a wireless terminal device in remote medical care, a wireless terminal device in a smart grid, a wireless terminal device in transportation safety, a wireless terminal device in a smart city, or a wireless terminal device in a smart home, etc.

As another example, the terminal device may also be a cellular phone, a cordless phone, a session initiation protocol (SIP) phone, a wireless local loop (WLL) station, a personal digital assistant (PDA), a handheld device with wireless communication functionality, a computing device, or another processing device connected to a wireless modem, an in-vehicle device, a wearable device, and a terminal device in a next-generation communication system (e.g., an NR communication system, a 6G communication system), or a terminal device in a future evolved Public Land Mobile Network (PLMN), etc., which is not limited specifically herein.

Optionally, the terminal device may be deployed on land, including indoor or outdoor, handheld, wearable, or vehicle-mounted; it may be deployed on water (e.g., ships, etc.); and it may be deployed in the air (e.g., aircraft, balloons, and satellites, etc.).

Optionally, the terminal device may include an apparatus with wireless communication functionality, such as a chip system, a chip, or a chip module. For example, the chip system may include a chip and may also include other discrete devices.

Optionally, the terminal device may be a chip, a chip module, an apparatus, a unit, etc., which is not limited specifically herein.

### 3. Network Device

An network device may be a device with transceiver functionality, which may be used to communicate with terminal devices.

Optionally, the network device may be responsible for radio resource management (RRM), quality of service (QoS) management, compression and encryption of data, and transmission and reception of data, etc. on the air interface.

Optionally, the network device may include a Base Station (BS) in a communication system or a device deployed in a Radio Access Network (RAN) for providing wireless communication functionality, i.e., the network device may include a device in the RAN.

For example, the device in the RAN may include an evolved node B (eNB or eNodeB) in an LTE communication system, a next generation evolved node B (ng-eNB) in an NR communication system, a next generation node B (gNB) in an NR communication system, a master node (MN) in a dual-connectivity architecture, a second node or secondary node (SN) in a dual-connectivity architecture, etc., which is not limited specifically herein.

Optionally, the network device may include a device in the Core Network (CN).

For example, the device in the CN may include Access and Mobility Management Function (AMF), User Plane Function (UPF), Session Management Function (SMF), etc.

Optionally, the network device may also be an access point (AP) in a WLAN, a relay station, a communication device in a future evolved PLMN network, and a communication device in an NTN network, etc.

Optionally, the network device may include an apparatus with the functionality of providing wireless communication for terminal devices, such as a chip system, a chip, or a chip module. For example, the chip system may include a chip or may include other discrete devices.

Optionally, the network device may be a transmission and reception point (TRP).

Optionally, the network device may communicate with Internet Protocol (IP) network, such as the Internet, a private IP network, or other data networks, etc.

Optionally, the network device may include a single standalone node, or two or more standalone nodes to implement the functionalities of the above base station. For example, the network device includes a centralized unit (CU) and a distributed unit (DU), such as a gNB-CU and a gNB-DU. Furthermore, in other embodiments of this application, the network device may also include an active antenna unit (AAU). The CU implements part of the functionalities of the network device, and the DU implements another part of the functionalities of the network device. For example, the CU is responsible for processing non-real time protocols and services, and implementing the functionalities of the radio resource control (RRC) layer, the service data adaptation protocol (SDAP) layer, and the packet data convergence protocol (PDCP) layer. The DU is responsible for processing physical layer protocols and real-time services, and implementing the functionalities of the radio link control (RLC) layer, the Medium Access Control (MAC) layer, and the physical (PHY) layer. Additionally, the AAU may implement some functionalities of physical layer processing, and related functionalities of radio frequency processing and active antennas. Since information at the RRC layer eventually becomes information at the PHY layer, or is transformed from information at the PHY layer, in such network deployment, a higher-layer signaling (such as an RRC signaling) may be considered as being generated by the CU and sent by the DU, or sent by the DU and AAU cooperatively. It can be understood that, the network device may include at least one of the CU, DU, and AAU. In addition, the CU may be classified as a RAN device, or may also be classified as a core network device, which is not limited specifically herein.

Optionally, the network device may be any one of multiple stations performing coherent joint transmission (CJT) with a terminal device, or another station other than the multiple stations, or another network device communicating with the terminal device over the network, which is not limited specifically herein. The coherent joint transmission between multiple stations may be coherent transmissions jointly performed by multiple stations, or it may involve different data belonging to a same Physical Downlink Shared Channel (PDSCH) being sent from different stations to the terminal device, or it may indicate that multiple stations are virtualized as one station for transmission. Parameters having names with the same meaning specified in other standards are also applicable to this application. That is, this application does not limit the names of these parameters. In the coherent joint transmission between multiple stations, stations of the multiple stations may be remote radio heads (RRHs), TRPs, etc., which are not limited specifically herein.

Optionally, the network device may be any one of the multiple stations performing non-coherent joint transmission with a terminal device, or another station other than the multiple stations, or another network device communicating with the terminal device over the network, which is not limited specifically herein. The non-coherent joint transmission between multiple stations may be non-coherent transmissions jointly performed by multiple stations, or it may involve different data belonging to a same PDSCH being sent from different stations to the terminal device. Parameters having names with the same meaning specified in other standards are also applicable to this application. That is, this application does not limit the names of these parameters.

It should be noted that, the TRP in this application is not limited to coherent joint transmission or non-coherent joint transmission scenarios, but may also be applicable to other scenarios, which is not limited specifically herein.

Optionally, the network device may be mobile. For example, the network device may be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station deployed on locations at land, water, etc.

Optionally, the network device may provide services for a cell, and terminal devices in the cell may communicate with the network device over transmission resources (e.g., spectrum resources). The cell may be a macro cell, a small cell, a metro cell, a micro cell, a pico cell, a femto cell, etc.

Optionally, the network device in the embodiments of this application may be a chip, a chip module, an apparatus, a unit, etc., which is not limited specifically herein.

### 4. Exemplary Description

An exemplary description of a communication system in an embodiment of this application is provided below.

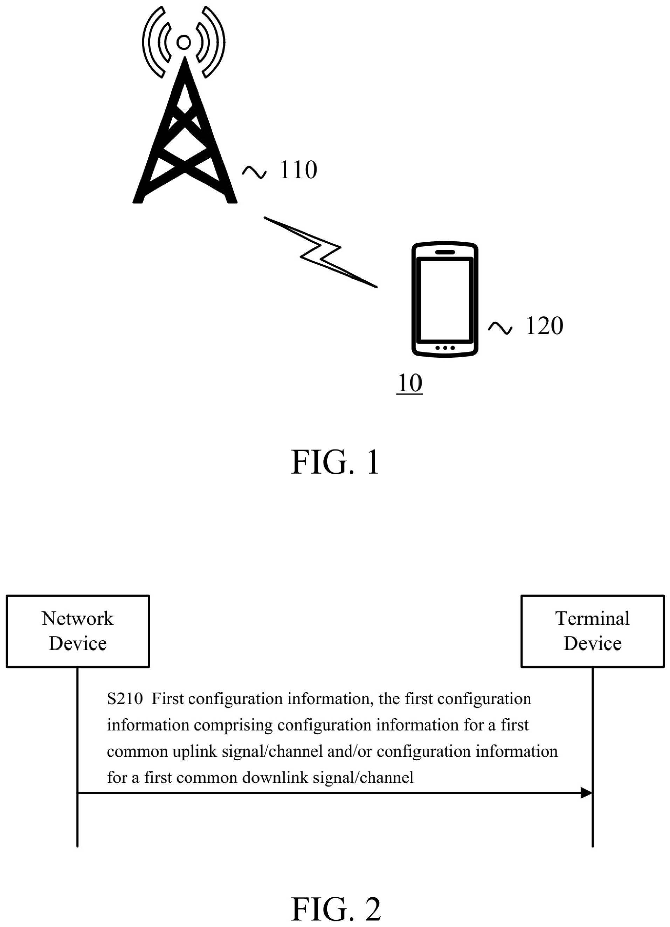

By way of example, FIG. 1 shows a network architecture of a communication system according to an embodiment of this application. As shown in FIG. 1, the communication system 10 may comprise a network device 110 and a terminal device 120.

It should be noted that FIG. 1 is merely an illustrative example of a network architecture of the communication system, and does not impose a limitation on the network architecture of the communication system according to an embodiment of this application.

For example, the communication system 10 may further comprise a server or other devices.

As another example, the communication system 10 may further comprise other network devices in addition to the network device 110.

As yet another example, the communication system 10 may further comprise other terminal devices in addition to the terminal device 120.

### II. A Communication Method

When the network load is zero or relatively low, the transmission of common downlink signals/channels occupies a significant proportion of transmission power consumption of the network device, and the reception of common uplink signals/channels also occupies a significant proportion of reception power consumption of the network device. Thus, this application intends to reduce transmission power consumption of a common downlink signal/channel and/or reception power consumption of a common uplink signal/channel, so as to achieve network power saving.

It should be noted that "common downlink signal/channel" in the embodiments may be understood as a common downlink signal or a common downlink channel. Certainly, the common downlink signal/channel may also be understood as a common downlink signal and a common downlink channel. That is, the common downlink signal/channel may represent the following three cases: a common downlink signal, a common downlink channel, or both a common downlink signal and a common downlink channel, which is not limited specifically herein.

In addition, "common uplink signal/channel" in the embodiments may be understood as a common uplink signal or a common uplink channel. Certainly, the common uplink signal/channel may also be understood as a common uplink signal and a common uplink channel. That is, the common uplink signal/channel may represent the following three cases: a common uplink signal, a common uplink channel, or both a common uplink signal and a common uplink channel, which is not limited specifically herein.

### Reduction of Transmission Power Consumption of a Common Downlink Signal/Channel

To reduce the transmission power consumption of a common downlink signal/channel, in this application, the original common downlink signal/channel may be processed, such that the processed common downlink signal/channel requires less transmission power consumption than the original common downlink signal/channel. The processed common downlink signal/channel may be referred to as "a reduced common downlink signal/channel".

The reduced common downlink signal/channel may be used to support basic cell camping operations for a terminal device, so as to reduce the transmission power consumption of a network device. When a cell (or network device) is in a first state, the reduced common downlink signal/channel may be used to enable the terminal device to achieve coarse downlink synchronization with the cell and measure the cell. In certain scenarios, the terminal device may receive system information (SI) and paging from the cell. The first state comprises at least one of: an OFF state, an energy-saving state, a sleep state, an inactive state, or an inactive period.

Optionally, the reduced common downlink signal/channel comprises a common downlink signal/channel with a lengthened period.

It can be understood that a period of an original common downlink signal/channel is lengthened. In this way, when the network device transmits the common downlink signal/channel with the lengthened period, the transmission power consumption of the network device may be reduced.

Optionally, the reduced common downlink signal/channel comprises a common downlink signal/channel with a reduced number of beams, such as a common downlink signal/channel with a single beam.

It should be noted that the number of beams refers to the number of directional beams for transmission or reception formed in an antenna array. A reduced number of beams means that diversity of radiation directions is reduced, so as to lower resource overhead and power consumption of the system. Thus, the number of beams required for transmission of an original common downlink signal/channel is reduced. In this way, when the network device transmits the common downlink signal/channel with the reduced number of beams, the transmission power consumption may be reduced.

Optionally, the common downlink signal/channel described in this application may comprise at least one of: a synchronization signal/PBCH block (SSB), or a channel state information reference signal (CSI-RS).

Optionally, the common downlink signal/channel described in this application may comprise System Information Block 1 (SIB1).

Optionally, the common downlink signal/channel described in this application may comprise other system information (OSI). Generally, OSI comprises System Information Block x (SIBx), where x > 1.

Optionally, the common downlink signal/channel described in this application may comprise paging.

Optionally, a reduced SSB may be an SSB with a lengthened period. For example, a period or default period of an original SSB is 20 milliseconds, and a period or default period of the reduced SSB is 160 milliseconds.

Optionally, a reduced SSB may also be an SSB with a reduced number of beams. For example, in an SSB burst or a half-frame, the number of original SSBs (the number of beams) is 8, and the number of reduced SSBs is 2.

Optionally, a reduced CSI-RS may be a CSI-RS with a lengthened period. For example, a period of an original CSI-RS is 20 milliseconds, and a period of the reduced CSI-RS is 160 milliseconds.

Optionally, a reduced CSI-RS may also be a CSI-RS with a reduced number of beams. For example, a number of original CSI-RSs for tracking may be configured as 8 (i.e., the number of beams is 8), and a number of the reduced CSI-RSs for tracking may be configured as 2 (i.e., the number of beams is 2).

Optionally, a reduced SIB1 may be an SIB1 with a lengthened period or repetition periodicity. For example, a period of an original SIB1 is 160 milliseconds, and a period of the reduced SIB1 is 1280 milliseconds; or a repetition periodicity of the original SIB1 is 20 milliseconds, and a repetition periodicity of the reduced SIB1 is 160 milliseconds.

Optionally, a reduced SIB1 may also be an SIB1 with a reduced number of beams. For example, an original SIB1 has a QCL relationship with 8 SSBs (i.e., the number of beams is 8), and the reduced SIB1 has a QCL relationship with 2 SSBs (i.e., the number of beams is 2). The QCL relationship may be an association relationship or a mapping relationship.

Optionally, a reduced OSI may be an OSI with a lengthened period or repetition periodicity. For example, a period of an original OSI is 160 milliseconds, and a period of the reduced OSI is 1280 milliseconds; or a repetition periodicity of the original OSI is 20 milliseconds, and a repetition periodicity of the reduced OSI is 160 milliseconds.

Optionally, a reduced OSI may also be an OSI with a reduced number of beams. For example, an original OSI has a QCL relationship with 8 SSBs (i.e., the number of beams is 8), and the reduced OSI has a QCL relationship with 2 SSBs (i.e., the number of beams is 2). The QCL relationship may be an association relationship or a mapping relationship.

Optionally, a reduced paging may be a paging with a lengthened period. For example, a period of an original paging is 160 milliseconds, and a period of the reduced paging is 1280 milliseconds.

Optionally, a reduced paging may also be a paging with a reduced number of beams. For example, an original paging has a QCL relationship with 8 SSBs (i.e., the number of beams is 8), and the reduced paging has a QCL relationship with 2 SSBs (i.e., the number of beams is 2). The QCL relationship may be an association relationship or a mapping relationship.

### Reduction of Reception Power Consumption of a Common uplink Signal/Channel

To reduce the reception power consumption of a common uplink signal/channel, in this application, the original common uplink signal/channel may be processed, such that the processed common uplink signal/channel requires less reception power consumption than the original common uplink signal/channel. The processed common uplink signal/channel may be referred to as "a reduced common uplink signal/channel".

The reduced common uplink signal/channel may be used to support basic cell camping operations for a terminal device, so as to reduce the reception power consumption of a network device. When a cell (or network device) is in a first state, the reduced common uplink signal/channel may be used to enable the terminal device to achieve coarse uplink synchronization with the cell.

Optionally, the reduced common uplink signal/channel comprises a common uplink signal/channel with a lengthened period.

It can be understood that a period of an original common uplink signal/channel is lengthened. In this way, when the network device receives the common uplink signal/channel with the lengthened period, the reception power consumption of the network device may be reduced.

Optionally, the reduced common uplink signal/channel comprises a common uplink signal/channel with a reduced number of beams, such as a common uplink signal/channel with a single beam.

It can be understood the number of beams required for transmission of an original common uplink signal/channel is reduced. In this way, when the network device receives the common uplink signal/channel with the reduced number of beams, the reception power consumption may be reduced.

Optionally, the common uplink signal/channel described in this application may comprise at least one of: a physical random access channel (PRACH), a Message A (MsgA), or a sounding reference signal (SRS). The PRACH and a preamble may be common (e.g., for contention-based random access) or dedicated (e.g., for contention-free random access); the SRS may be common (e.g., be shared by multiple terminal devices) or dedicated.

It should be noted that the PRACH comprises time-domain resources, frequency-domain resources, and code-domain resources. A PRACH occasion corresponds to the time-domain and/or frequency-domain resources of the PRACH, and a preamble corresponds to the code-domain resources of the PRACH. The terminal device may use only one or more preambles within the PRACH occasion, i.e., part of the time-domain, frequency-domain, and/or code-domain resources.

Optionally, a reduced PRACH may be a PRACH with a lengthened period. For example, a period of an original PRACH is 20 milliseconds, and a period of the reduced PRACH is 160 milliseconds. The above PRACH with the lengthened period may be a RO with a lengthened period, since RO is the time-frequency resources of the PRACH.

Optionally, a reduced PRACH may also be a PRACH with a reduced number of beams. For example, an original PRACH is mapped to 8 SSBs (i.e., the number of beams is 8), and the reduced PRACH is mapped to two SSBs (i.e., the number of beams is 2). The above PRACH with a reduced number of beams may be a RO or preamble with a reduced number of beams, since both RO and preamble can be mapped to SSBs (i.e., be mapped to beams). In specific, the reduced PRACH may also be a RO or preamble with a reduced number of beams. For example, an original RO or preamble is mapped to 8 SSBs (i.e., the number of beams is 8), and the reduced RO or preamble is mapped to 2 SSBs (i.e., the number of beams is 2).

Optionally, the reduced MsgA may be MsgA with a lengthened period. For example, a period of an original MsgA is 20 milliseconds, and a period of the reduced MsgA is 160 milliseconds. The above MsgA with the lengthened period may be a RO or PUSCH occasion (PO) with a lengthened period, since both RO and PO are time-frequency resources of the PRACH.

Optionally, a reduced MsgA may also be a MsgA with a reduced number of beams. For example, an original MsgA is mapped to 8 SSBs (i.e., the number of beams is 8), and the reduced MsgA is mapped to 2 SSBs (i.e., the number of beams is 2). The above MsgA with a reduced number of beams may be a RO, preamble, or PO with a reduced number of beams, since all of RO, preamble, and PO can be mapped to SSBs (i.e., be mapped to beams). In specific, the reduced PRACH may also be a RO, preamble, or PO with a reduced number of beams. For example, an original RO, preamble, or PO is mapped to 8 SSBs (i.e., the number of beams is 8), and the reduced RO, preamble, or PO is mapped to 2 SSBs (i.e., the number of beams is 2).

Optionally, a reduced SRS may be an SRS with a lengthened period. For example, a period of an original SRS is 20 milliseconds, and a period of the reduced SRS is 160 milliseconds.

Optionally, the reduced SRS may also be an SRS with a reduced number of beams. For example, a number of original SRSs may be configured as 8 (i.e., the number of beams is 8), and a number of the reduced SRSs for tracking may be configured as 2 (i.e., the number of beams is 2).

Random access procedure may be divided into a 4-step random access procedure and a 2-step random access procedure.

In specific, the 4-step random access procedure includes the following steps.

Step 1: a terminal device transmits a PRACH to a network device. The PRACH may also be referred to as a Message 1 (Msg1). The Msg1 is the first message in the 4-step random access procedure. Since the PRACH is carried in a preamble, the PRACH may also be referred to as a preamble. The preamble may be primarily used for requesting access from the network device, enabling the network device to estimate transmission delay between the network device and the terminal device based on the preamble and calibrate uplink timing based on the transmission delay, and indicate the uplink timing to the terminal device via a Random Access Response (RAR) message.

Step 2: the network device transmits a RAR to the terminal device if the terminal device is allowed to access. The RAR may also be referred to as a Message 2 (Msg2). The Msg2 may comprise information such as an uplink grant (UL grant), a random access preamble identifier (RAPID), a cell-radio network temporary identifier (C-RNTI), etc.

Step 3: the terminal device transmits a Message 3 (Msg3) to the network device based on the uplink time-frequency resource information provided in the UL grant in the Msg2. The Msg3 is the third message in the 4-step random access procedure. The Msg3 is carried in a physical uplink shared channel (PUSCH). In addition, the Msg3 may be a radio resource control (RRC) setup request message.

Step 4: the network device transmits a Message 4 (Msg4) to the terminal device after obtaining Msg3 sent by the terminal device. Msg4 may be an RRC setup message. Generally, upon the terminal device receives the Msg4, the random access procedure is completed.

The 4-step random access procedure is also referred to as a Type-1 random access procedure. In specific, the 2-step random access procedure includes the following steps.

Step 1: A terminal device transmits a PRACH and a PUSCH to a network device. The PRACH and PUSCH may also be referred to as a MsgA. The MsgA may comprise contents of the Msg1 and Msg3.

Step 2: the network device transmits a random access response to the terminal device if the terminal device is allowed to access. For the 2-step random access procedure, the RAR may also be referred to as a Message B (MsgB). The MsgB may comprise contents of the Msg2 and Msg4. Generally, upon the terminal device receives the MsgB, the terminal device has completed the random access procedure.

The 2-step random access procedure is also referred to as a Type-2 random access procedure.

In addition, the terminal device generally needs to transmit a Message 5 (Msg5) after completion of the random access procedure. The Message 5 may be a radio resource control (RRC) setup complete message.

### [Implementation of Data Transmission and Reception]

Since a reduced common uplink/downlink signal/channel may only support basic cell camping operations for the terminal device, the terminal device needs to access a cell when the terminal device needs to perform data transmission or reception in the cell.

To enable the terminal device to access the cell, in this application, an on-demand common downlink signal/channel and on-demand common uplink signal/channel are introduced. In this way, the terminal device may perform a random access procedure (such as an initial access) via the on-demand common uplink/downlink signal/channel, and finally access the cell through the random access procedure.

In the embodiments of this application below, multiple schemes will be provided to illustrate "a procedure in which a network configures a reduced common uplink/downlink signal/channel", "a procedure in which a terminal device requests or solicits an on-demand common uplink/downlink signal/channel", and "a procedure in which a network configures an on-demand common uplink/downlink signal/channel", so as to enable network power saving. Each of the schemes may be interrelated and combined, and an arbitrary combination among the schemes may form a new embodiment, and such new embodiment also falls within the protection scope of this application, and details will not be described here.

### [Scheme 1]

### ◆ Description

To reduce transmission power consumption of common downlink signals/channels and/or reception power consumption of common uplink signals/channels, "a reduced common uplink signal/channel" and "a reduced common downlink signal/channel" are introduced in this application. In "Scheme 1" of this application, signaling or messages may be employed to enable the network to configure "the reduced common downlink signal/channel" and/or "the reduced common uplink signal/channel".

Below, this application provides a communication method for illustration, as shown in FIG. 2. In the communication method, interaction between a network device and a terminal device is taken as an example to enable the network's configuration. The network device may be a chip, a chip module, or a communication module, etc.; and the terminal device may be a chip, a chip module, or a communication module, etc., which is not limited specifically herein. In specific, the method comprises the following steps.

S210: the network device transmits first configuration information, wherein the first configuration information comprises configuration information for a first common uplink signal/channel and/or configuration information for a first common downlink signal/channel.

Correspondingly, the terminal device receives the first configuration information.

It can be seen that in this application, the network configures the first common uplink signal/channel and/or the first common downlink signal/channel through the first configuration information. Also, a cell (or the network device) in a first state provides basic information to the terminal device via the first common downlink signal/channel and/or the first common uplink signal/channel, so that the terminal device basically camps on the cell (based on the first common uplink signal/channel, and/or the first common downlink signal/channel).

Optionally, the first common uplink signal/channel is a reduced common uplink signal/channel. In this way, the network configures the reduced common uplink signal/channel via the first configuration information. That is, the first common uplink signal/channel may comprise at least one of: a reduced PRACH, a reduced MsgA, or a reduced SRS. It can be understood that the first common uplink signal/channel here does not include a Msg3. That is, the Msg3 is not reduced.

Optionally, the first common downlink signal/channel is a reduced common downlink signal/channel. In this way, the network configures the reduced common downlink signal/channel via the first configuration information. That is, the first common downlink signal/channel may comprise at least one of: a reduced SSB, a reduced SIB1, a reduced paging, or a reduced CSI-RS. Optionally, the first configuration information is carried in the system information of the cell.

In this way, since the first configuration information contains the configuration for the first common uplink signal/channel of the cell, i.e., the reduced common uplink signal/channel, it is appropriate to carry the first configuration information in the system information of the cell.

Further, the system information may include an SIB1. The first configuration information is relatively important, and the SIB1 is remaining main system information (RMSI) (other than the MIB), so it is appropriate to carry the first configuration information in the SIB1. Since basic information for acquiring the SIB1 comes from the MIB, information of the SIB1 itself may not be needed before the SIB1 is acquired. After the SIB1 is acquired, the complete information of the SIB1 (such as complete configuration information for a search space set of a Physical Downlink Control Channel (PDCCH) of the SIB1) may be obtained, to reduce power consumption of the terminal device. Therefore, the SIB1 may carry the first configuration information (including configuration information for the first common uplink signal/channel and the first common downlink signal/channel), and the complete information of the SIB1 itself may also be carried in the first configuration information, which are not contradictory.

Further, the system information may include a reduced SIB1. A terminal user equipment obtains the first configuration information (including configuration information for the first common uplink signal/channel and the first common downlink signal/channel) via the reduced SIB1, such that the terminal user equipment basically camps on the cell (with the first common uplink signal/channel and the first common downlink signal/channel).

Optionally, the first common downlink signal/channel may comprise a reduced SSB. In this way, by receiving the reduced SSB, the terminal device may achieve coarse downlink synchronization with the cell in the first state and measure the cell in the first state. The network device may transmit the reduced SSB, to enable the terminal device to achieve coarse downlink synchronization with the cell in the first state and measure the cell in the first state.

Optionally, the first common downlink signal/channel may comprise a reduced SIB1. In this way, by receiving the reduced SIB1, the terminal device may obtain basic configuration information of the cell in the first state, thereby camping on the cell in the first state. The network device may transmit the reduced SIB1, to enable the terminal device to obtain the basic configuration information of the cell in the first state, thereby camping on the cell in the first state.

Optionally, the first common downlink signal/channel may comprise a reduced OSI. In this way, by receiving the reduced OSI, the terminal device may obtain more configuration information of the cell in the first state, thereby camping on the cell in the first state better. The network device may transmit the reduced OSI, to enable the terminal device to obtain more configuration information of the cell in the first state, thereby camping on the cell in the first state better.

Optionally, the first common downlink signal/channel may comprise a reduced paging. In this way, by receiving the reduced paging, the terminal device may be addressed by the network, thereby camping on the cell in the first state better. The network device may transmit the reduced paging, to enable the terminal device to be addressed by the network, thereby camping on the cell in the first state better. Optionally, the first common downlink signal/channel may comprise a reduced CSI-RS. In this way, by receiving the reduced CSI-RS, the terminal device may achieve coarse downlink synchronization with the cell in the first state faster and wake up earlier to receive a paging. The network device may transmit the reduced CSI-RS, to enable the terminal to achieve coarse downlink synchronization with the cell in the first state faster and wake up earlier to receive a paging.

### ◆ Solicitation of an On-Demand Common Uplink/Downlink Signal/Channel

To enable a terminal device to access a cell and ensure that the terminal device is capable of data transmission and reception in the cell, "an on-demand common uplink/downlink signal/channel" is introduced in this application.

Based thereon, in this application, the terminal device may solicit an on-demand common uplink/downlink signal/channel from the network device, which also represents a state transition of the cell or network device.

That is, the terminal device may solicit the network device to transfer the cell or network device from a first state to a second state. This is because the network device can transmit an on-demand common downlink signal/channel and receive an on-demand common uplink signal/channel within a cell, only after the cell or network device transitions from a sleep state to a non-sleep state. The second state comprises at least one of: an OFF state, a non-energy-saving state, a non-sleep state, an active state or an active period. Transition from the first state to the second state comprises at least one of: transition from an OFF state to an ON state, transition from a sleep state to a non-sleep state, transition from an inactive state to an active state, or transition from an inactive period to an active period.

In a specific implementation of this application, the reduced common uplink signal/channel may be used to request the on-demand common uplink/downlink signal/channel, or to request the state transition of the cell or network device.

For example, in the flow as shown in FIG. 2, after the terminal device obtains the first configuration information, the terminal device transmits the first common uplink signal/channel, the first common uplink signal/channel requesting the cell to transition from the first state to the second state.

Optionally, the first common uplink signal/channel may comprise a reduced PRACH. In this way, the terminal device may initiate a 4-step random access procedure by transmitting the reduced PRACH, so that the terminal device requests the cell to transition from the first state to the second state, and also initiates the 4-step random access procedure. The terminal device may also transition to a connected state when the cell transitions to the second state. By receiving the reduced PRACH, the network device may assist the terminal device in completing the 4-step random access procedure, so that the terminal device requests the cell to transition from the first state to the second state, and also initiates the 4-step random access procedure. The terminal device may also transition to a connected state when the cell transitions to the second state.

Optionally, the first common uplink signal/channel may comprise a reduced MsgA. In this way, the terminal device may initiate a 2-step random access procedure by transmitting the reduced MsgA, so that the terminal device requests the cell to transition from the first state to the second state, and also initiates the 2-step random access procedure. The terminal device may also transition to a connected state when the cell transitions to the second state. By receiving the reduced MsgA, the network device may assist the terminal device in completing the 2-step random access procedure, so that the terminal device requests the cell to transition from the first state to the second state, and also initiates the 2-step random access procedure. The terminal device may also transition to a connected state when the cell transitions to the second state.

Optionally, the first common uplink signal/channel may comprise a reduced SRS. In this way, by transmitting the reduced SRS, the terminal device may enable the network device to timely obtain channel state information (CSI) of the cell in the first state. By receiving the reduced SRS, the network device may timely obtain the CSI of the cell in the first state.

It should be noted that the terminal device transmits the first common uplink signal/channel and reports measurement results via the first common uplink signal/channel, so that the network device can determine whether to transition the cell from the first state to the second state according to the reported measurement results.

Correspondingly, the network device receives the first common uplink signal/channel, and obtains the reported measurement results from the first common uplink signal/channel, so as to determine whether to transition the cell from the first state to the second state according to the reported measurement results.

The measurement results may comprise measurement values, such as reference signal receiving power (RSRP), or signal to interference plus noise ratio (SINR). The measurement values may be measurement values of one or more reduced SSBs, the maximum value among measurement values of multiple reduced SSBs, or an average (such as linear average) of measurement values of multiple reduced SSBs.

The measurement results may comprise an index of a reduced SSB, such as a reduced SSB recommended by the terminal device, or an index of the strongest reduced SSB determined by the terminal device (such as the reduced SSB with the largest measurement value).

The measurement results may comprise an index of a beam, such as an index of a beam recommended by the terminal device, or an index of the strongest beam determined by the terminal device (such as the beam with the largest measurement value). An index of a beam may correspond to a candidate cell. A beam may be a beam corresponding to multiple reduced SSBs, and the terminal device selects, from a codebook, the beam corresponding to (or associated with or mapped to) the multiple reduced SSBs. In specific, indices of multiple reduced SSBs may correspond to an index of a beam. This correspondence may be established via a codebook. The correspondence between the reduced SSBs and the beam allows the number of beams to be greater than the number of reduced SSBs, and the terminal device to report beam information with finer granularity than the reduced SSBs.

In this way, when the terminal device needs to perform data transmission or reception, the terminal device requests the cell to transition from the first state to the second state via the first common uplink signal/channel, so that the network device may transmit the on-demand common downlink signal/channel and receive the on-demand common uplink signal/channel within the cell.

Also, by receiving the first common uplink signal/channel, the network device determines whether there is a terminal device that requests the cell to transition from the first state to the second state, so as to determine whether to transmit the on-demand common downlink signal/channel and receive the on-demand common uplink signal/channel in the cell according to the current cell condition.

Optionally, the first state comprises at least one of: an OFF state, an energy-saving state, a sleep state, an inactive state or an inactive period. The second state comprises at least one of: an ON state, a non-energy-saving state, a non-sleep state, an active state or an active period.

### ◆ Determination of Whether Network Device has Received First Common Uplink Signal/Channel

It should be noted that after transmitting a first common uplink signal/channel to the network device, the terminal device needs to know whether the network device has received the first common uplink signal/channel, so as to determine whether to retransmit the first common uplink signal/channel. In this regard, according to this application, the network device may directly notify the terminal device. For example, the network device may transmit signaling/message to the terminal device to indicate that the first common uplink signal/channel has been received.

Different from an existing RAR window or MsgB window whose start time is directly associated with an end of transmission of PRACH, a cell or the network device needs to turn on or reset hardware and/or software when the cell or network device needs to transition from the first state to the second state, so an additional transition time is required. Configuration parameter of the RAR window may be ra-ResponseWindow. Configuration parameter of the MsgB window may be MsgB-ResponseWindow.

However, since the network device may fail to transmit such signaling/message, or the terminal device may fail to receive such signaling/message, the terminal device may not timely know whether the network device has received the first common uplink signal/channel, causing power consumption to be wasted.

Optionally, a timer is introduced. When the timer expires, the terminal device determines that the network device has not received the first common uplink signal/channel. This timer may be referred to as "a first timer". The duration of the first timer represents a time period during which the terminal device waits for the network device's response regarding whether the first common uplink signal/channel has been received. For example, the first common uplink signal/channel here may be a reduced PRACH or a reduced MsgB. For example, the duration of the first timer covers the RAR window or the MsgB window. That is, the expiration time of the first timer is later than the end time of the RAR window or the MsgB window. For example, in the flow as shown in FIG. 2, the terminal device may start the first timer upon the terminal device finishes transmission of the first common uplink signal/channel. That is, the terminal device may start the first timer after the last symbol or slot of the first common uplink signal/channel ends.

As another example, in the flow as shown in FIG. 2, the terminal device may start the first timer after the terminal device begins transmission of the first common uplink signal/channel. That is, the terminal device may start the first timer after the first symbol or slot of the first common uplink signal/channel begins.

In this way, if the terminal device receives a response from the network device before the first timer expires, the terminal device stops the first timer. If no response is received until the first timer expires, the terminal device retransmits the first common uplink signal/channel. It can be seen that the terminal device may determine, by expiration of the first timer, whether the network device has received the first common uplink signal/channel, thereby determining whether to retransmit the first common uplink signal/channel.

Optionally, an additional delay is introduced and added to the start time of the RAR window or the MsgB window. That is, the start time of the RAR window or the MsgB window is postponed by an additional value. If the terminal device does not receive the RAR within the RAR window or the MsgB window, the terminal device determines that the network device has not received the first common uplink signal/channel. This additional delay may be referred to as "a first delay". The first delay together with an existing delay may be added to the start time of the RAR window or the MsgB window. That is, the start time of the RAR window or the MsgB window is postponed by the sum of the first delay and the existing delay. The existing delay may be a Time Advance (TA) and/or public propagation delay (e.g., parameter k_mac), etc. The first delay is configured by a higher-layer parameter or is predefined. For example, the first common uplink signal/channel here may be a reduced PRACH or a reduced MsgB.

After the terminal device finishes transmission of the first common uplink signal/channel, it waits for the first delay and/or the existing delay and begins to monitor the RAR or MsgB when the RAR window or the MsgB window begins. In this way, if the terminal device does not receive a response before the RAR window or the MsgB window ends, the terminal device determines that the network device does not received the first common uplink signal/channel, and may retransmit the first common uplink signal/channel.

### [Scheme 2]

### ◆ Description

In "Scheme 2", after receiving a request for on-demand common uplink/downlink signal/channel from a terminal device, a network device may respond to the terminal device's request for on-demand common uplink/downlink signal/channel, so as to inform, via the response, the terminal device of at least one of the following:
the network device agrees to transmit the on-demand common downlink signal/channel, the network device agrees to receive the on-demand common uplink signal/channel, or that the cell or network device has already transitioned from the first state to the second state, etc.

Also, according to the response, the terminal device may obtain a configuration of the on-demand common downlink signal/channel and/or the on-demand common uplink signal/channel, so as to transmit the on-demand common downlink signal/channel and/or receive the on-demand common uplink signal/channel according to the configuration.

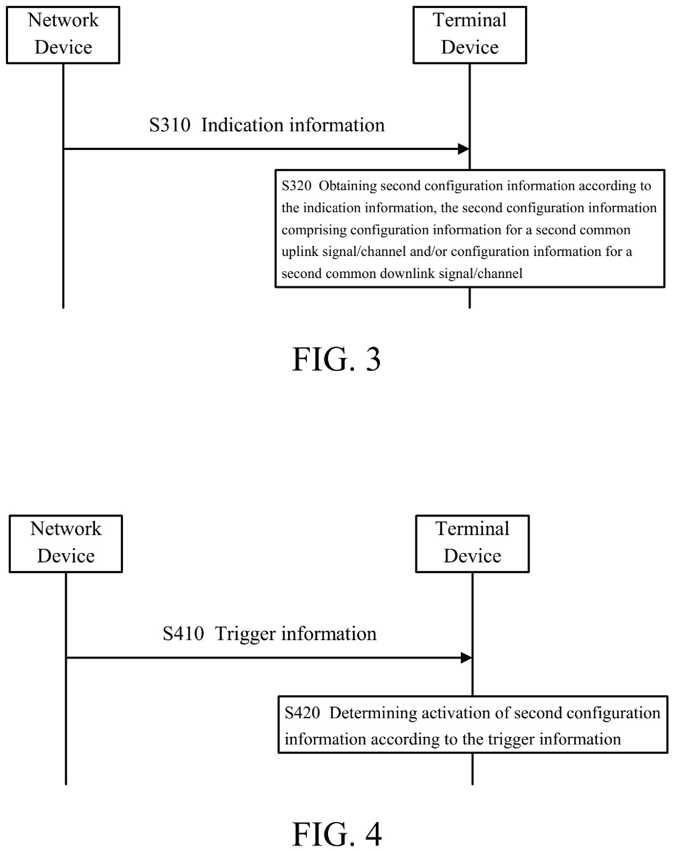

Below, this application provides another communication method for illustration, as shown in FIG. 3. In the communication method, interaction between a network device and a terminal device is taken as an example to realize the above response and configuration. In specific, the method comprises the following steps.

S310: the network device transmits indication information.Correspondingly, the terminal device receives the indication information.

S320: the terminal device obtains second configuration information according to the indication information, wherein the second configuration information comprises configuration information for a second common uplink signal/channel and/or configuration information for a second common downlink signal/channel.

It can be seen that in this application, the indication information may be used to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Also, the terminal device may obtain the second configuration information according to the indication information, which enables the network to configure the second common uplink signal/channel and/or the second common downlink signal/channel via the second configuration information.

Unlike the existing random access procedure, in this procedure, the cell or network device needs to transition from the first state to the second state, thus the cell-level configuration needs to be reconfigured, for example, changed from a configuration for the first common uplink/downlink signal/channel to a configuration for the second common uplink/downlink signal/channel. Therefore, it is necessary to solve the problems of: how the network device indicates the change in the cell-level configuration to the terminal device, how the terminal device obtains information about the change in the cell-level configuration and obtains the new cell-level configuration.

Optionally, the second common downlink signal/channel is an on-demand common downlink signal/channel. It can be understood that the existence of the second common downlink signal/channel does not imply the existence of the first common downlink signal/channel. The terms "first" and "second" herein are used merely for convenience of description and do not imply any association between these two terms.

Optionally, the second common downlink signal/channel comprises at least one of: an on-demand SSB, an on-demand SIB1, an on-demand OSI, an on-demand paging, or an on-demand CSI-RS.

Optionally, the on-demand SSB may be an SSB with a shortened period, or may be restored to an SSB with an original period. For example, a period or default period of the on-demand SSB is 20 milliseconds, and a period or default period of the reduced SSB is 160 milliseconds. The on-demand SSB may also be an SSB with an increased number of beams, or may be restored to an SSB with an original number of beams. For example, in one SSB burst or half-frame, the number of on-demand SSBs (number of beams) is 8, and the number of reduced SSBs is 2. The reduced CSI-RS may be a CSI-RS with a lengthened period, or may be restored to a CSI-RS with an original period. For example, a period of the on-demand CSI-RS is 20 milliseconds, and a period of the reduced CSI-RS is 160 milliseconds. The on-demand CSI-RS may also be a CSI-RS with an increased number of beams, or may be restored to a CSI-RS with an original number of beams. For example, a number of the on-demand CSI-RSs for tracking may be configured as 8 (i.e., the number of beams is 8), and a number of the reduced CSI-RSs for tracking may be configured as 2 (i.e., the number of beams is 2).

Optionally, the on-demand SSB may be a Non-Cell-Defining SSB (NCD-SSB). In general, a terminal device in a connected state may be configured with an SSB, or a terminal device in an inactive state may be configured with an NCD-SSB when transmitting a small packet. The NCD-SSB is configured via dedicated RRC signaling and may be regarded as an on-demand SSB. The network device may also configure the NCD-SSB as the second common downlink signal/channel for a terminal device in a non-connected state (an idle state/an inactive state) for random access. In this way, the NCD-SSB used for a terminal device in a connected state may be shared with a terminal device in a non-connected state for random access, and the terminal device that has completed the random access (entered the connected state) may continue to use the configured NCD-SSB.

Optionally, the on-demand SIB1 may be an SIB1 with a shortened period or shortened repetition periodicity, or may be restored to an SIB1 with an original period or an original repetition periodicity. For example, a period of the on-demand SIB1 is 160 milliseconds, and a period of the reduced SIB1 is 1280 milliseconds; or a repetition periodicity of the on-demand SIB1 is 20 milliseconds, and a repetition periodicity of the reduced SIB1 is 160 milliseconds. The on-demand SIB1 may also be an SIB1 with an increased number of beams, or may be restored to an SIB1 with an original number of beams. For example, the on-demand SIB1 has a QCL relationship with 8 SSBs (i.e., the number of beams is 8), and the reduced SIB1 has a QCL relationship with 2 SSBs (i.e., the number of beams is 2). The QCL relationship may be an association relationship or a mapping relationship.

Optionally, the on-demand OSI may be an OSI with a shortened period or shortened repetition periodicity, or may be restored to an OSI with an original period or an original repetition periodicity. For example, a period of the on-demand OSI is 160 milliseconds, and a period of the reduced OSI is 1280 milliseconds; or a repetition periodicity of the on-demand OSI is 20 milliseconds, and a repetition periodicity of the reduced OSI is 160 milliseconds. The on-demand OSI may also be an OSI with a reduced number of beams, or may be restored to an OSI with an original number of beams. For example, the on-demand OSI has a QCL relationship with 8 SSBs (i.e., the number of beams is 8), and the reduced OSI has a QCL relationship with 2 SSBs (i.e., the number of beams is 2). The QCL relationship may be an association relationship or a mapping relationship.

Optionally, the on-demand paging may be a paging with a shortened period, or may be restored to a paging with an original period. For example, a period of the on-demand paging is 160 milliseconds, and a period of the reduced paging is 1280 milliseconds. The on-demand paging may also be a paging with an increased number of beams, or may be restored to a paging with an original number of beams. For example, the on-demand paging has a QCL relationship with 8 SSBs (i.e., the number of beams is 8), and the reduced paging has a QCL relationship with 2 SSBs (i.e., the number of beams is 2). The QCL relationship may be an association relationship or a mapping relationship.

Optionally, the second common downlink signal/channel may comprise an on-demand SSB. In this way, by receiving the on-demand SSB, the terminal device may achieve fine downlink synchronization with the cell in the second state, thereby camping on the cell in the second state. By transmitting the on-demand SSB, the network device may enable the terminal device to achieve fine downlink synchronization with the cell in the second state, thereby camping on the cell in the second state.

Optionally, the second common downlink signal/channel may comprise an on-demand SIB1. In this way, by receiving the on-demand SIB1, the terminal device may obtain basic configuration information of the cell in the second state, thereby camping on the cell in the second state. By transmitting the on-demand SIB1, the network device may enable the terminal device to obtain basic configuration information of the cell in the second state, thereby camping on the cell in the second state.

Optionally, the second common downlink signal/channel may comprise an on-demand OSI. In this way, by receiving the on-demand OSI, the terminal device may obtain more configuration information of the cell in the second state, thereby camping on the cell in the second state. By transmitting the on-demand OSI, the network device may enable, the terminal device to obtain more configuration information of the cell in the second state, thereby camping on the cell in the second state.

Optionally, the second common downlink signal/channel may comprise an on-demand paging. In this way, by receiving the on-demand paging, the terminal device may be addressed by the network in a more timely manner, thereby camping on the cell in the second state. By transmitting the on-demand paging, the network device may enable the terminal device to be addressed by the network in a more timely manner, thereby camping on the cell in the second state.Optionally, the second common downlink signal/channel may comprise an on-demand CSI-RS. In this way, by receiving the on-demand CSI-RS, the terminal device may achieve fine downlink synchronization with the cell in the second state faster and wake up earlier to receive a paging. By transmitting the on-demand CSI-RS, the network device may enable the terminal device to achieve fine downlink synchronization with the cell in the second state faster and wake up earlier to receive a paging.Optionally, the second common uplink signal/channel is an on-demand common uplink signal/channel. It can be understood that the existence of the second common uplink signal/channel does not imply the existence of the first common uplink signal/channel. The terms "first" and "second" herein are used merely for convenience of description and do not imply any association between these two terms.

Optionally, the second common uplink signal/channel comprises at least one of: an on-demand PRACH, an on-demand MsgA, or an on-demand SRS.

Optionally, the on-demand PRACH may be a PRACH with a shortened period, or may be restored to a PRACH with an original period. For example, a period of the on-demand PRACH is 20 milliseconds, and a period of the reduced PRACH is 160 milliseconds. The above PRACH with the lengthened period may be a RO with a lengthened period, since RO is the time-frequency resources of the PRACH.

Optionally, the on-demand PRACH may also be a PRACH with an increased number of beams, or may be restored to a PRACH with an original number of beams. For example, the on-demand PRACH is mapped to 8 SSBs (i.e., the number of beams is 8), and the reduced PRACH is mapped to 2 SSBs (i.e., the number of beams is 2). The above PRACH with a reduced number of beams may be a RO or preamble with a reduced number of beams, since both RO and preamble can be mapped to SSBs (i.e., be mapped to beams). In specific, the reduced PRACH may also be a RO or preamble with a reduced number of beams. For example, the on-demand RO or preamble is mapped to 8 SSBs (i.e., the number of beams is 8), and the reduced RO or preamble is mapped to 2 SSBs (i.e., the number of beams is 2).

Optionally, the on-demand MsgA may be a MsgA with a shortened period, or may be restored to a MsgA with an original period. For example, a period of the on-demand MsgA is 20 milliseconds, and a period of the reduced MsgA is 160 milliseconds. The above MsgA with the lengthened period may be a RO or PUSCH occasion (PO) with a lengthened period, since both RO and PO are time-frequency resources of the PRACH.

Optionally, the on-demand MsgA may also be a MsgA with an increased number of beams, or may be restored to a MsgA with an original number of beams. For example, the on-demand MsgA is mapped to 8 SSBs (i.e., the number of beams is 8), and the reduced MsgA is mapped to 2 SSBs (i.e., the number of beams is 2). The above MsgA with a reduced number of beams may be a RO, preamble, or PO with a reduced number of beams, since all of RO, preamble, and PO can be mapped to SSBs (i.e., be mapped to beams). In specific, the on-demand PRACH may also be a RO, preamble, or PO with a reduced number of beams. For example, the on-demand RO, preamble, or PO is mapped to 8 SSBs (i.e., the number of beams is 8), and the reduced RO, preamble, or PO is mapped to 2 SSBs (i.e., the number of beams is 2).

Optionally, the on-demand SRS may be an SRS with a shortened period, or may be restored to an SRS with an original period. For example, a period of the on-demand SRS is 20 milliseconds, and a period of the reduced SRS is 160 milliseconds.

Optionally, the on-demand SRS may also be an SRS with a reduced number of beams, or may be restored to an SRS with an original number of beams. For example, a number of the on-demand SRSs may be configured as 8 (i.e., the number of beams is 8), and a number of the reduced SRSs for tracking may be configured as 2 (i.e., the number of beams is 2).

Optionally, the second common uplink signal/channel may comprise an on-demand PRACH. In this way, the terminal device may initiate a 4-step random access procedure by transmitting the on-demand PRACH, so that the terminal device randomly accesses the cell in the second state and transitions to a connected state. By receiving the on-demand PRACH, the network device may assist the terminal device in completing the 4-step random access procedure, and transitioning to the connected state.

Optionally, the second common uplink signal/channel may comprise an on-demand MsgA. In this way, the terminal device may initiate a 2-step random access procedure by transmitting the on-demand MsgA, so that the terminal device randomly accesses the cell in the second state and transitions to a connected state. By receiving the on-demand MsgA, the network device may assist the terminal device in completing the 2-step random access procedure, and transitioning to the connected state.

Optionally, the second common uplink signal/channel may comprise an on-demand SRS. In this way, by transmitting the on-demand SRS, the terminal device may enable the network device to timely obtain channel state information for the cell in the second state. By receiving the on-demand SRS, the network device may timely obtain the CSI of the cell in the second state.

It should be noted that the terminal device transmits the second common uplink signal/channel and reports measurement results via the second common uplink signal/channel, so that the network device can assist, according to the reported measurement results, the terminal device in randomly accessing the cell in the second state and entering the connected state.

Correspondingly, the network device receives the second common uplink signal/channel, and obtains the measurement results from the second common uplink signal/channel, thereby assisting, according to the reported measurement results, the terminal device in randomly accessing the cell in the second state and entering the connected state.

The measurement results may comprise measurement values, such as RSRP, SINR. The measurement values may be measurement values of one or more on-demand SSBs, the maximum value among measurement values of multiple on-demand SSBs, or an average (such as linear average) of measurement values of multiple on-demand SSBs.

The measurement results may comprise an index of an on-demand SSB, such as an on-demand SSB recommended by the terminal device, or an index of the strongest on-demand SSB determined by the terminal device (such as the on-demand SSB with the largest measurement value).

The measurement results may comprise an index of a beam, such as an index of a beam recommended by the terminal device, or an index of the strongest beam determined by the terminal device (such as the beam with the largest measurement value). An index of a beam may correspond to a candidate cell. A beam may be a beam corresponding to multiple on-demand SSBs, and the terminal device selects, from a codebook, the beam corresponding to (or associated with or mapped to) the multiple on-demand SSBs. In specific, indices of multiple on-demand SSBs may correspond to an index of a beam. This correspondence may be established via a codebook. The correspondence between the on-demand SSBs and the beam allows the number of beams to be greater than the number of on-demand SSBs, and the terminal device to report beam information with finer granularity than the on-demand SSBs.

### ◆ Indication Information

The indication information may be carried in various information or instructions, which are described respectively below.

### [Scheme 2-1]

Optionally, the indication information is carried in downlink control information (DCI) or a DCI format.

In this way, the terminal device may obtain the indication information quickly by monitoring the PDCCH, thereby obtaining the second configuration information quickly.

Optionally, the DCI or the DCI format includes a cyclic redundancy check (CRC) that may be scrambled by a paging radio network temporary identifier (P-RNTI).

In this way, the terminal device may obtain the indication information quickly by monitoring the paging PDCCH, and may treat an acquisition process of the second configuration information as an acquisition process of system information (SI) update, which reduces system complexity.

Optionally, the DCI or the DCI format includes a CRC that is scrambled by a random access radio network temporary identifier (RA-RNTI), and the DCI or the DCI format includes one or more bits reused for the indication information.

In this way, although the DCI or the DCI format includes the CRC scrambled by the RA-RNTI, the DCI or DCI format is not a real RAR PDCCH, because one or more bits of the DCI or DCI format have been reused to carry the indication information.

Optionally, the second configuration information is carried in the updated system information of the cell. The updated system information comprises an updated SIB1, etc.

In this way, the terminal device may use the acquisition process of system information (SI) update to obtain the second configuration information. Since the acquisition process of the SI update (using the SI modification period) is relatively reliable, the acquisition process of the second configuration information is also relatively reliable.

### [Scheme 2-2]

Optionally, the indication information is carried in the DCI or DCI format.

In this way, the terminal device may obtain the indication information by monitoring the PDCCH quickly, thereby obtaining the second configuration information quickly.

Optionally, the DCI or the DCI format includes a CRC that may be scrambled by RA-RNTI, and the DCI or the DCI format includes one or more reserved bits that are used to carry the indication information.

In this way, the terminal device may obtain the indication information quickly by monitoring the RAR PDCCH. Since receiving the RAR PDCCH is a step in the random access procedure (such as the Msg2 reception step), the terminal device may obtain the second configuration information incidentally during the random access procedure, which simplifies the operation of the terminal device. In this situation, the RAR PDCCH is used both for the RAR and for carrying the indication information.

Optionally, the second configuration information is carried in the RAR message.

In this way, the terminal device may obtain the second configuration information incidentally during the random access procedure, without waiting for the SI update process as in "Scheme 2-1", which accelerates the acquisition process of the second configuration information.

Optionally, the second configuration information is carried in the updated system information of the cell contained in the RAR message, or in partial updated system information of the cell contained in the RAR message. The updated system information comprises an updated SIB1, etc.

In this way, the RAR message serves as a container to contain the updated system information of the cell or partial updated system information of the cell. The second configuration information is initially included in SIB1, may be sent during the SI update process or in the RAR message, thereby allowing the second configuration information to be obtained more flexibly.

Optionally, the DCI or the DCI format includes a CRC that may be scrambled by MsgB-RNTI, and the DCI or the DCI format includes one or more reserved bits that are used to carry the indication information.

In this way, the terminal device may obtain the indication information quickly by monitoring the MsgB PDCCH. Since receiving the MsgB PDCCH is a step in the random access procedure (such as the MsgB reception step), the terminal device may obtain the second configuration information incidentally during the random access procedure, which simplifies the operation of the terminal device. In this situation, the MsgB PDCCH is used both for the MsgB and for carrying the indication information.

Optionally, the second configuration information is carried in the MsgB.

In this way, the terminal device may obtain the second configuration information incidentally during the random access procedure, without waiting for the SI update process as in "Scheme 2-1", which accelerates the acquisition process of the second configuration information.

Optionally, the second configuration information is carried in the updated system information of the cell contained in the MsgB, or in partial updated system information of the cell contained in the MsgB. The updated system information comprises an updated SIB1, etc.

In this way, the MsgB serves as a container to contain the updated system information of the cell or partial updated system information of the cell. The second configuration information is initially included in SIB1, may be sent during the SI update process or in the message, thereby allowing the second configuration information to be obtained more flexibly.

### [Scheme 2-3]

Optionally, the indication information is carried in an SIB1.

In this way, the terminal device determines, according to the indication information, whether the SIB1 is a reduced SIB1 or an on-demand SIB1.

After receiving the SIB1, the terminal device determines, according to the indication information, whether the SIB1 is a reduced SIB1 or an on-demand SIB1 (where another terminal device has already sent a request to the cell, and the network device has received the request and transitioned the cell from the first state to the second state). If the SIB1 is a reduced SIB1, the terminal device may transmit a request. If the SIB1 is an on-demand SIB1, the terminal device may initiate or continue a random access procedure without transmitting a request.

The terminal device determines, according to the indication information, whether the SIB1 belongs to a first common downlink signal/channel or a second common downlink signal/channel.

After receiving the SIB 1, the terminal device determines, according to the indication information, whether the SIB1 belongs to a first common downlink signal/channel or a second common downlink signal/channel (where another terminal device has already sent a request to the cell, and the network device has received the request and transitioned the cell from the first state to the second state). If the SIB 1 is a reduced SIB1, the terminal device may transmit a request. If the SIB 1 is an on-demand SIB1, the terminal device may initiate or continue a random access procedure without transmitting a request.

### ◆ Transmitting a Second Common Uplink Signal/Channel

It should be noted that after the terminal device obtains, according to the indication information, configuration information for a second common uplink signal/channel and/or configuration information for a second common downlink signal/channel, the terminal device may transmit the second common uplink signal/channel according to the configuration information for the second common uplink signal/channel and/or receive the second common downlink signal/channel.

For example, in the flow as shown in FIG. 3, if the terminal device receives the indication information, the terminal device may begin to transmit the second common uplink signal/channel after a first time point. The term "beginning to transmit" herein means "permitted to transmit", while whether to actually transmit is autonomously determined by the terminal device. The first time point may be understood as a time point when the terminal device transmits the second common uplink signal/channel. The second common uplink signal/channel herein may be an on-demand PRACH or an on-demand MsgA. That is, the terminal device initiates a random access procedure for the cell in the second state.

Correspondingly, the network device begins to receive the second common uplink signal/channel after the first time point. Since whether to transmit the second common uplink signal/channel is autonomously determined by the terminal device, the network device should begin blind detection of the second common uplink signal/channel. The first time point may be understood as a time point when the network device begins blind detection of the second common uplink signal/channel.

In this way, within the time interval between the moment when the indication information is received and the first time point, the terminal device may have enough time to obtain the second configuration information (e.g., the second configuration information is carried in the updated SIB1, or the RAR message, or the MsgB), and obtain the configuration information for the second common downlink signal/channel according to the second configuration information, so as to re-establish downlink synchronization with the network device first via the second common downlink signal/channel. After the first time point, the terminal device begins to transmit the second common uplink signal/channel again, so as to re-establish uplink synchronization with the network device via the second common uplink signal/channel.

Optionally, the first time point is a time point after an end time of the indication information and separated from the end time of the indication information by a first time interval. The first time interval may be understood as the minimum time interval for the terminal device to transmit the second common uplink signal/channel. The first time interval may also be understood as the minimum time interval for the network device to receive the second common uplink signal/channel. The first time interval may be a time interval configured by a higher-layer parameter or a predefined time interval. For example, the first time interval may be one or more transmission periods of the second configuration information, and/or one or more SSB transmission periods. For example, the transmission period of the second configuration information may be the transmission period of the updated system information, or the transmission period of the updated SIB1.

In this way, within the first time interval, the terminal device has enough time to obtain the second configuration information, and establishes downlink synchronization with the network device via one or more SSBs.

### ◆ Determining Whether Network Device has Received First Common Uplink Signal/Channel

In combination with contents in the above "Scheme 1", the terminal device transmits the first common uplink signal/channel to the network device to request the cell to transitioned from a first state to a second state

Optionally, the terminal device may start a first timer after transmitting the first common uplink signal/channel to the network device. In this way, the terminal device may determine whether the network device has received the first common uplink signal/channel by determining whether the indication information is received before the first timer expires.

For example, in the flow as shown in FIG. 3, if the first timer expires and no indication information is received, the terminal device may retransmit the first common uplink signal/channel. The first timer may be a timer started when a terminal device requests the cell to transition from a first state to a second state.

In this way, the terminal device may determine, by expiration of the first timer, whether the network device has received the first common uplink signal/channel, thereby determining whether to retransmit the first common uplink signal/channel.

Optionally, after the terminal device finishes transmission of the first common uplink signal/channel, it waits for the first delay and/or the existing delay and begins to monitor the RAR or MsgB when the RAR window or the MsgB window begins. In this way, if the terminal device does not receive a response before the RAR window or the MsgB window ends, the terminal device determines that the network device does not received the first common uplink signal/channel, and may retransmit the first common uplink signal/channel.

### ◆ Transmission of Msg3

It should be noted that, after the terminal device obtains configuration information for the second common uplink signal/channel according to the indication information, the terminal device may transmit a Msg3 according to the configuration information for the second common uplink signal/channel. Here, the terminal device directly transmit the Msg3 according to the RAR scheduling. That is, the terminal device continues the random access procedure for the cell in the second state.

For example, in the flow as shown in FIG. 3, if the terminal device receives the indication information, the terminal device may begin to transmit the Msg3 after a second time point.

Optionally, since the transmission of the Msg3 is scheduled by the RAR, as long as the start time of the Msg3 scheduled by the RAR is at or after the second time point, there is no need to introduce a new time point. In this situation, the second time point is the start time of the Msg3 scheduled by the RAR.

Optionally, the start time of the Msg3 scheduled by the RAR may not account for the time for the network device to transmit/process the second common uplink/downlink signal/channel, and/or the time for the terminal device to receive/process the configuration of the second common uplink/downlink signal/channel. The start time of the Msg3 needs to be added with the time for the network device to transmit/process the second common uplink/downlink signal/channel, and/or the time for the terminal device to receive/process the configuration of the second common uplink/downlink signal/channel additionally. In this situation, the second time point is the start time of the Msg3 scheduled by the RAR plus a preset time interval. The preset time interval may be a time interval configured by a higher-layer parameter or a predefined time interval. The preset time interval is related to the time for the network device to transmit/process the second common uplink/downlink signal/channel, and/or the time for the terminal device to receive/process the configuration of the second common uplink/downlink signal/channel.

Further, the start time of the Msg3 needs to be additionally added with the existing time interval and the time for the network device to transmit/process the second common uplink/downlink signal/channel, and/or the time for the terminal device to receive/process the configuration of the second common uplink/downlink signal/channel. The existing time interval is a time interval configured by a higher-layer parameter or a predefined time interval, such as cellSpecificKOffset. In this situation, the second time point is the start time of the Msg3 scheduled by the RAR plus the existing time interval and the preset time interval. The preset time interval may be a time interval configured by a higher-layer parameter or a predefined time interval. The preset time interval is related to the time for the network device to transmit/process the second common uplink/downlink signal/channel, and/or the time for the terminal device to receive/process the configuration of the second common uplink/downlink signal/channel.

Correspondingly, the network device begins to receive the Msg3 after the second time point.

In this way, within the time interval between the moment when the indication information is received and the second time point, the terminal device may have enough time to obtain the second configuration information (e.g., the second configuration information is carried in the updated SIB1, or the RAR message, or the MsgB), and obtain the configuration information for the second common downlink signal/channel according to the second configuration information, so as to re-establish downlink synchronization with the network device via the second common downlink signal/channel. After the second time point, the terminal device begins to transmit the Msg3, so as to establish uplink synchronization with the network device via the Msg3.

Optionally, the second time point is a time point after an end time of the indication information and separated from the end time of the indication information by a second time interval. The second time interval may be a time interval configured by a higher-layer parameter or a predefined time interval. In this way, the second time point is not related to the start time of the Msg3 scheduled by the RAR, but is configured by a higher-layer parameter directly or predefined. For example, the second time interval may be one or more transmission periods of the second configuration, and/or one or more SSB transmission periods. For example, the transmission period of the second configuration information may be the transmission period of the updated system information, or the transmission period of the updated SIB1.In this way, within the second time interval, the terminal device has enough time to obtain the second configuration information, and establishes downlink synchronization with the network device based on one or more SSBs.

Optionally, the scheduling delay for the Msg3 (e.g., k2, as defined in the protocol) comprises the second time interval.

In this way, when scheduling Msg3, the network device has already taken into account the time for the terminal device to obtain the second configuration information and establish downlink synchronization with the network device based on one or more SSBs.

Optionally, configuration information for the Msg3 is carried in the second configuration information.

In this way, the terminal device obtains the configuration information for the Msg3 from the second configuration information, so as to transmit the Msg3 according to the configuration information for the Msg3.

Optionally, the Msg3 carries an SSB index. That is, the terminal device may transmit the SSB index in the Msg3.

In this way, when the mapping between an SSB and a PRACH/preamble in the first configuration information is different from the mapping between an SSB and a PRACH/preamble in the second configuration information, the terminal device transmits the Msg3 to the network device, and informs the network device of its desired SSB index via the SSB index carried in the Msg3, so that the network device may adjust transmission beam direction according to the desired SSB index of the terminal device. This scenario applies after a cell transitions from a first state to a second state, where a beam direction of the first uplink/downlink signal/channel changes relative to a beam direction of the second uplink/downlink signal/channel, e.g., switching from a single beam to multiple beams.

Optionally, an occasion for Msg3 corresponds to one SSB or a group of SSBs. The occasion for the Msg3 is used for transmitting the Msg3.

In this way, the network device may configure the occasion for the Msg3 via one SSB or a group of SSBs according to the correspondence, so that the terminal device transmits the Msg3 according to the occasion for the Msg3.Optionally, a start time of the occasion for the Msg3 is obtained from an RAR message.

In this way, the terminal device may obtain the start time of the occasion for the Msg3 from the RAR message. Correspondingly, the network device may transmit the start time of the occasion for the Msg3 via the RAR message.

### ◆ Mapping Between SSB and PRACH Occasion (RO)/Preamble

Optionally, the mapping between an SSB and a PRACH occasion/preamble in the second configuration information is the same as the mapping between an SSB and a PRACH occasion/preamble in the first configuration information.

For example, the terminal device expects that the mapping between the SSB and the PRACH occasion/preamble in the first configuration information is the same as the mapping between the SSB and the PRACH occasion/preamble in the second configuration information. Alternatively, the network device sets the mapping between the SSB and the PRACH occasion/preamble in the first configuration information to be the same as the mapping between the SSB and the PRACH occasion/preamble in the second configuration information.

In this way, when a cell is in the first state, the terminal device may indicate its desired beam transmission direction to the network device by transmitting the PRACH/preamble. When a cell is in the second state, the terminal device does not need to indicate its desired transmission beam direction from a base station to the network device. This scenario applies after the cell transitions from a first state to a second state, where a beam direction of the first uplink/downlink signal/channel does not change relative to a beam direction of the second uplink/downlink signal/channel. For example, only the transmission period becomes shorter. Optionally, the second configuration information does not comprise the mapping between an SSB and a PRACH occasion/preamble, and the network indicates the terminal device to use the mapping between an SSB and a PRACH occasion/preamble in the first configuration information.

### [Scheme 3]

In the above "Scheme 1" and "Scheme 2", the terminal device is in an idle state or an inactive state. In "Scheme 3", the terminal device is in a connected state. For a terminal device in a connected state, the transition of a cell from the first state to the second state may occur in various scenarios, such as a Carrier Aggregation (CA) scenario, a Dual Connectivity (DC) scenario (e.g., involving a Primary Cell (PCell) and a Secondary Cell (SCell)), a multi-carrier scenario, or a scenario involving an anchor cell and non-anchor cell, etc.

In "Scheme 3", an on-demand common downlink signal/channel is primarily an on-demand SSB, and an on-demand common uplink signal/channel is primarily an on-demand PRACH/preamble. In addition, after receiving a request for on-demand common uplink/downlink signal/channel from a terminal device, a network device may respond to the terminal device's request for on-demand common uplink/downlink signal/channel, so as to inform, via the response, the terminal device of at least one of the following:
the network device agrees to transmit the on-demand common downlink signal/channel, the network device agrees to receive the on-demand common uplink signal/channel, or that the cell or network device has already transitioned from the first state to the second state, etc.

Also, according to the response, the terminal device may obtain a configuration of the on-demand common downlink signal/channel and/or the on-demand common uplink signal/channel, so as to transmit the on-demand common downlink signal/channel and/or receive the on-demand common uplink signal/channel according to the configuration.

Below, this application provides another communication method for illustration, as shown in FIG. 4. In the communication method, interaction between a network device and a terminal device is taken as an example to realize the above response and configuration. In specific, the method comprises the following steps.

S410: the network device transmits trigger information.Correspondingly, the terminal device receives the trigger information.

Optionally, the trigger information may comprise second configuration information. The second configuration information comprises configuration information for a second common uplink signal/channel and/or configuration information for a second common downlink signal/channel. The second common downlink signal/channel is an on-demand common downlink signal/channel. It can be understood that the existence of the second common downlink signal/channel does not imply the existence of the first common downlink signal/channel. The terms "first" and "second" herein are used merely for convenience of description and do not imply any association between these two terms. The signals/channels comprised in the first common downlink signal/channel are as described above, and will not be repeated here. The second common uplink signal/channel is an on-demand common uplink signal/channel. It can be understood that the existence of the second common uplink signal/channel does not imply the existence of the first common uplink signal/channel. The terms "first" and "second" herein are used merely for convenience of description and do not imply any association between these two terms. The signals/channels comprised in the first common uplink signal/channel are as described above, and will not be repeated here.

In this way, the network device may indicate configuration information for the SCell via RRC signaling sent in advance by the PCell, and the terminal device may obtain the configuration information for the SCell via the RRC signaling sent in advance by the PCell, wherein the configuration information for the SCell comprises the second configuration information, which eliminates the need to carry the second configuration information in the trigger information.

S420: the terminal device determines activation of the second configuration information according to the trigger information.

The activation of the second configuration information may be used to indicate that the cell transitions from the first state to the second state, may be used to indicate that the network device agrees to transmit the second common downlink signal/channel and/or receive the second common uplink signal/channel, or may be used to indicate activation of the configuration information for the second common downlink signal/channel and/or the configuration information for the second common uplink signal/channel.

It can be seen that in this application, the trigger information is employed to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Thus, the terminal device transmits the second common uplink signal/channel and/or receives the second common downlink signal/channel based on the activation of the second configuration information.

Optionally, the trigger information is an SCell activation signaling, or is carried in the SCell activation signaling.

In this way, the network device may respond to the request from the terminal device by reusing the SCell activation signaling.

Optionally, the trigger information is a cell switch signaling, or is carried in the cell switch signaling.In this way, the network device may respond to the request from the terminal device by reusing the cell switch signaling.

### III. Exemplary Description of a Communication Apparatus

The foregoing primarily introduces the solutions of the embodiments of this application from the aspect of a method. It can be understood that, to implement the above functions, the terminal device comprises corresponding hardware structures and/or software modules configured to execute respective functions. Those skilled in the art shall readily appreciate that, in conjunction with the units and algorithm steps of various examples described in the embodiments disclosed herein, this application may be implemented in hardware or a combination of hardware and computer software. Whether a certain function is implemented in hardware or software executed by hardware is determined by the specific application and design constraints of the technical solution. Those skilled in the art may utilize different methods to implement the described functions for each specific application, but such implementations should not be considered as exceeding the scope of this application.

Functional units of the terminal device may be divided based on the above method examples in the embodiments of this application. For example, functional units may be divided according to the respective functions, or two or more functions may be integrated into one processing unit. The above integrated unit may be implemented in hardware or in software program modules. It should be noted that the division of units in the embodiments of this application is merely illustrative and constitutes only a logical functional division. Other divisions may be utilized in practice.

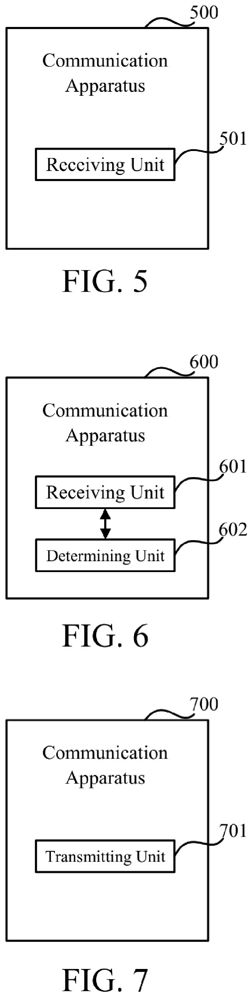

In the case of adopting an integrated unit, FIG. 5 is a block diagram showing functional units of a communication apparatus according to an embodiment of this application. The communication apparatus 500 comprises a receiving unit 501.Optionally, the receiving unit 501 may be a module unit configured to receive signal, data, information, sequences, etc., which is not limited specifically herein.

Optionally, the communication apparatus 500 may further comprise a processing unit. The processing unit may be a processor or a controller, e.g., a baseband processor, a baseband chip, a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof, which may implement or execute various exemplary logic blocks, modules, and circuits described in conjunction with the disclosure of this application. The processing unit may also be a combination that implements computational functions, e.g., a combination of one or more microprocessors, a combination of a DSP and a microprocessor, etc.

Optionally, the communication apparatus 500 may further comprise a transmitting unit. The transmitting unit may be a module unit configured to transmit signal, data, information, sequences, etc., which is not limited specifically herein.

Optionally, the communication apparatus 500 may further comprise a storage unit configured to store computer program codes or instructions to be executed by the communication apparatus 500. The storage unit may be a memory.

Optionally, the communication apparatus 500 may be a chip or a chip module.Optionally, the receiving unit 501 may be integrated into other units.

For example, the receiving unit 501 may be integrated in the communication unit. The communication unit may be a communication interface, a transceiver, a transceiver circuit, etc.Optionally, the receiving unit 501 is configured to execute any step performed by a network device, a chip, a chip module, or a transmitter of a network device in the above method embodiments. Detailed descriptions are provided below.

In specific implementation, the receiving unit 501 is configured to execute the steps involved in the method embodiments of "Scheme 1" or "Scheme 2". The receiving unit 501, when performing actions such as transmitting, may selectively invoke other units to complete the corresponding action. Since the embodiments of this application involve multiple schemes, detailed description is provided below respectively from the aspect of each scheme.In the above "Scheme 1", the receiving unit 501 is configured to receive first configuration information, wherein the first configuration information comprises configuration information for a first common uplink signal/channel and/or configuration information for a first common downlink signal/channel.

It can be seen that in this application, the network configures the first common uplink signal/channel and/or the first common downlink signal/channel through the first configuration information. Also, a cell (or network device) in a first state supports basic cell camping operations for a terminal device via the first common downlink signal/channel and/or the first common uplink signal/channel.

Optionally, the communication apparatus 500 further comprises a transmitting unit configured to, after receiving the first configuration information:
transmit the first common uplink signal/channel, the first common uplink signal/channel requesting a cell to transition from a first state to a second state.

Optionally, the communication apparatus 500 further comprises a starting unit.

The starting unit is configured to start a first timer upon completion of the transmission of the first common uplink signal/channel; or start a first timer upon initiation of the transmission of the first common uplink signal/channel.

Optionally, the first state comprises at least one of: an OFF state, an energy-saving state, a sleep state, an inactive state or an inactive period;
the second state comprises at least one of: an ON state, a non-energy-saving state, a non-sleep state, an active state or an active period.Optionally, the first common uplink signal/channel is a reduced common uplink signal/channel;
the first common downlink signal/channel is a reduced common downlink signal/channel.

Optionally, the reduced common uplink signal/channel comprises a common uplink signal/channel with a lengthened period;
the reduced common downlink signal/channel comprises a common downlink signal/channel with a lengthened period.

Optionally, the reduced common uplink signal/channel comprises a common uplink signal/channel with a reduced number of beams;
the reduced common downlink signal/channel comprises a common downlink signal/channel with a reduced number of beams.

Optionally, the common downlink signal/channel comprises at least one of: an SSB or CSI-RS;
the common uplink signal/channel comprises at least one of: a PRACH, a MsgA, or SRS.In the above "Scheme 2", the receiving unit 501 is configured to receive indication information; and obtain second configuration information according to the indication information, wherein the second configuration information comprises configuration information for a second common uplink signal/channel and/or configuration information for a second common downlink signal/channel.

It can be seen that in this application, the indication information may be used to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Also, the terminal device may obtain the second configuration information according to the indication information, which enables the network to configure the second common uplink signal/channel and/or the second common downlink signal/channel via the second configuration information.

Optionally, the communication apparatus 500 further comprises a transmitting unit.

The transmitting unit is configured to, based on reception of the indication information, transmit the second common uplink signal/channel after a first time point.

Optionally, the communication apparatus 500 further comprises a transmitting unit.

The transmitting unit is configured to, in response to expiration of a first timer and failure to receive the indication information, retransmit the first common uplink signal/channel;
wherein the first timer is a timer started when a terminal device requests the cell to transition from a first state to a second state.

Optionally, the communication apparatus 500 further comprises a transmitting unit.

The transmitting unit is configured to, based on reception of the indication information, transmit a Msg3 after a second time point.

Optionally, the indication information is carried in downlink control information (DCI) or a DCI format.

Optionally, the DCI or the DCI format includes a cyclic redundancy check (CRC) scrambled by a paging radio network temporary identifier P-RNTI.

Optionally, the DCI or the DCI format includes a CRC scrambled by a random access radio network temporary identifier (RA-RNTI), and the DCI or the DCI format includes one or more bits reused for the indication information.

Optionally, the second configuration information is carried in the updated system information of the cell.

Optionally, the DCI or the DCI format includes a CRC scrambled by RA-RNTI, and the DCI or the DCI format includes one or more reserved bits that are used to carry the indication information.

Optionally, the second configuration information is carried in a Random Access Response (RAR) message.

Optionally, the second configuration information is carried in the updated system information of the cell contained in the RAR message, or in partial updated system information of the cell contained in the RAR message.

Optionally, the first time point is a time point after an end time of the indication information and separated from the end time of the indication information by a first time interval.

Optionally, the first time interval is one or more transmission periods of the second configuration information, and/or one or more SSB transmission periods.

Optionally, the second time point is a time point after an end time of the indication information and separated from the end time of the indication information by a second time interval.

Optionally, the second time interval is one or more transmission periods of the second configuration information, and/or one or more SSB transmission periods.

Optionally, a scheduling delay for the Msg3 comprises the second time interval.

Optionally, a configuration for the Msg3 is carried in the second configuration information.

Optionally, the Msg3 carries an SSB index.

Optionally, an occasion for the Msg3 corresponds to one SSB or a group of SSBs.

Optionally, a start time of the occasion for the Msg3 is obtained from an RAR message.

Optionally, the mapping between an SSB and a physical random access channel (PRACH) occasion/preamble in the second configuration information is the same as the mapping between an SSB and a PRACH occasion/preamble in the first configuration information; or
the second configuration information does not comprise the mapping between an SSB and a PRACH occasion/preamble, and the network indicates the terminal device to use the mapping between an SSB and a PRACH occasion/preamble in the first configuration information;
the first configuration information is received before the second configuration information, and the first configuration information comprises configuration information for the first common uplink signal/channel and/or configuration information for the first common downlink signal/channel. It should be noted that specific implementations of various operations in the embodiment as shown in FIG. 5 may refer to the description in the above method embodiments, and details will not be repeated here.

### IV. Exemplary Description of another Communication Apparatus

In the case of adopting an integrated unit, FIG. 6 is a block diagram showing functional units of another communication apparatus according to an embodiment of this application. The communication apparatus 600 comprises a receiving unit 601 and a determining unit 602.

Optionally, the receiving unit 601 may be a module unit configured to receive signal, data, information, sequences, etc., which is not limited specifically herein.

Optionally, the determining unit 602 may be a module unit configured to determine signal, data, information, sequences, etc., which is not limited specifically herein.

Optionally, the communication apparatus 600 may further comprise a processing unit. The processing unit may be a processor or a controller, e.g., a baseband processor, a baseband chip, a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof, which may implement or execute various exemplary logic blocks, modules, and circuits described in conjunction with the disclosure of this application. The processing unit may also be a combination that implements computational functions, e.g., a combination of one or more microprocessors, a combination of a DSP and a microprocessor, etc.

Optionally, the communication apparatus 600 may further comprise a transmitting unit. The transmitting unit may be a module unit configured to transmit signal, data, information, sequences, etc., which is not limited specifically herein.

Optionally, the communication apparatus 600 may further comprise a storage unit configured to store computer program codes or instructions to be executed by the communication apparatus 600. The storage unit may be a memory.

Optionally, the communication apparatus 600 may be a chip or a chip module.

Optionally, the receiving unit 601 may be integrated into other units. For example, the receiving unit 601 may be integrated in the communication unit. The communication unit may be a communication interface, a transceiver, a transceiver circuit, etc.

Optionally, the determining unit 602 may be integrated into other units. For example, the determining unit 602 may be integrated in the communication unit.

Optionally, the receiving unit 601 and the determining unit 602 are configured to execute any step performed by a network device, a chip, a chip module, or a transmitter of a network device in the above method embodiments. Detailed descriptions are provided below.

In specific implementation, the receiving unit 601 and the determining unit 602 are configured to execute the steps involved in the method embodiments of "Scheme 3". The receiving unit 601 and the determining unit 602, when performing actions such as transmitting, may selectively invoke other units to complete the corresponding action.

The receiving unit 601 is configured to receive trigger information.

The determining unit 602 is configured to determine activation of second configuration information according to the trigger information, wherein the second configuration information comprises configuration information for a second common uplink signal/channel and/or configuration information for a second common downlink signal/channel.

It can be seen that in this application, the trigger information is employed to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Thus, the terminal device transmits the second common uplink signal/channel and/or receives the second common downlink signal/channel based on the activation of the second configuration information.

Optionally, the trigger information is carried in at least one of: SCell activation signaling, cell switch signaling.

It should be noted that specific implementations of various operations in the embodiment as shown in FIG. 6 may refer to the description in the above method embodiments, and details will not be repeated here.

### V. Exemplary Description of yet another Communication Apparatus

The foregoing primarily introduces the solutions of the embodiments of this application from the aspect of a method. It can be understood that, to implement the above functions, the network device comprises corresponding hardware structures and/or software modules configured to execute respective functions. Those skilled in the art shall readily appreciate that, in conjunction with the units and algorithm steps of various examples described in the embodiments disclosed herein, this application may be implemented in the form of hardware, or a combination of hardware and computer software. Whether a certain function is implemented in hardware or software executed by hardware is determined by the specific application and design constraints of the technical solution. Those skilled in the art may use different methods to implement the described functions for each specific application, but such implementations should not be considered as exceeding the scope of this application.

Functional units of the network device may be divided based on the above method examples in the embodiments of this application. For example, functional units may be divided according to the respective functions, or two or more functions may be integrated into one processing unit. The above integrated units may be implemented in hardware or in software program modules. It should be noted that the division of units in the embodiments of this application is merely illustrative and constitutes only a logical functional division. Other divisions may be utilized in practice.

In the case of adopting an integrated unit, FIG. 7 is a block diagram showing functional units of a communication apparatus according to an embodiment of this application. The communication apparatus 700 comprises a transmitting unit 701.

Optionally, the transmitting unit 701 may be a module unit configured to transmit signal, data, information, sequences, etc., which is not limited specifically herein.

Optionally, the communication apparatus 700 may further comprise a processing unit. The processing unit may be a processor or a controller, e.g., a baseband processor, a baseband chip, a central processing unit (CPU), a general-purpose processor, a digital signal processor (DSP), an application-specific integrated circuit (ASIC), a field programmable gate array (FPGA), or other programmable logic devices, transistor logic devices, hardware components, or any combination thereof, which may implement or execute various exemplary logic blocks, modules, and circuits described in conjunction with the disclosure of this application. The processing unit may also be a combination that implements computational functions, e.g., a combination of one or more microprocessors, a combination of a DSP and a microprocessor, etc.

Optionally, the communication apparatus 700 may further comprise a receiving unit. The transmitting unit may be a module unit configured to receive signal, data, information, sequences, etc., which is not limited specifically herein.

Optionally, the communication apparatus 700 may further comprise a storage unit configured to store computer program codes or instructions to be executed by the communication apparatus 700. The storage unit may be a memory.

Optionally, the communication apparatus 700 may be a chip or a chip module.

Optionally, the transmitting unit 701 may be integrated into other units.

For example, the transmitting unit 701 may be integrated in the communication unit. The communication unit may be a communication interface, a transceiver, a transceiver circuit, etc.

Optionally, the transmitting unit 701 is configured to execute any step performed by a network device, a chip, a chip module, or a transmitter of a network device in the above method embodiments. Detailed descriptions are provided below.

In specific implementation, the transmitting unit 701 is configured to execute the steps involved in the method embodiments of "Scheme 1", "Scheme 2" or "Scheme 3". The receiving unit 501, when performing actions such as transmitting, may selectively invoke other units to complete the corresponding action. Since the embodiments of this application involve multiple schemes, detailed descriptions are provided below respectively from the aspect of each scheme.

In the above "Scheme 1", the transmitting unit 701 is configured to transmit first configuration information, wherein the first configuration information comprises configuration information for a first common uplink signal/channel and/or configuration information for a first common downlink signal/channel.

It can be seen that in this application, the network configures the first common uplink signal/channel and/or the first common downlink signal/channel through the first configuration information. Also, when a cell (or network device) is in a first state, downlink synchronization between the terminal device and the network device may be maintained via the first common downlink signal/channel, and uplink synchronization between the terminal device and the network device may be maintained via the first common uplink signal/channel.

Optionally, the communication apparatus 700 further comprises a receiving unit configured to, after transmitting the first configuration information:
receive the first common uplink signal/channel, the first common uplink signal/channel requesting a cell to transition from a first state to a second state.

Optionally, the first state comprises at least one of: an OFF state, an energy-saving state, a sleep state, an inactive state or an inactive period;
the second state comprises at least one of: an ON state, a non-energy-saving state, a non-sleep state, an active state or an active period.

Optionally, the first common uplink signal/channel is a reduced common uplink signal/channel;
the first common downlink signal/channel is a reduced common downlink signal/channel.

Optionally, the reduced common uplink signal/channel comprises a common uplink signal/channel with a lengthened period;
the reduced common downlink signal/channel comprises a common downlink signal/channel with a lengthened period.

Optionally, the reduced common uplink signal/channel comprises a common uplink signal/channel with a reduced number of beams;
the reduced common downlink signal/channel comprises a common downlink signal/channel with a reduced number of beams.

Optionally, the common downlink signal/channel comprises at least one of: an SSB or CSI-RS;
the common uplink signal/channel comprises at least one of: a PRACH, a MsgA, or SRS.

In the above "Scheme 2", the transmitting unit 701 is configured to transmit indication information, the indication information being used for obtaining second configuration information, wherein the second configuration information comprises configuration information for a second common uplink signal/channel and/or configuration information for a second common downlink signal/channel.

It can be seen that in this application, the indication information may be used to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Also, the terminal device may obtain the second configuration information according to the indication information, which enables the network to configure the second common uplink signal/channel and/or the second common downlink signal/channel via the second configuration information.

Optionally, the communication apparatus 700 further comprises a receiving unit.

The receiving unit is configured to receive the second common uplink signal/channel after a first time point.

Optionally, the communication apparatus 700 further comprises a receiving unit.

The receiving unit is configured to receive a Msg3 after the second time point.

Optionally, the indication information is carried in the DCI or DCI format.

Optionally, the DCI or the DCI format includes a cyclic redundancy check (CRC) scrambled by a paging radio network temporary identifier P-RNTI.

Optionally, the DCI or the DCI format includes a CRC scrambled by a random access radio network temporary identifier (RA-RNTI), and the DCI or the DCI format includes one or more bits reused for the indication information.

Optionally, the second configuration information is carried in the updated system information of the cell.

Optionally, the DCI or the DCI format includes a CRC scrambled by RA-RNTI, and the DCI or the DCI format includes one or more reserved bits that are used to carry the indication information.

Optionally, the second configuration information is carried in a Random Access Response (RAR) message.

Optionally, the second configuration information is carried in the updated system information of the cell contained in the RAR message, or in partial updated system information of the cell contained in the RAR message.

Optionally, the first time point is a time point after an end time of the indication information and separated from the end time of the indication information by a first time interval.

Optionally, the first time interval is one or more transmission periods of the second configuration information, and/or one or more SSB transmission periods.

Optionally, the second time point is a time point after an end time of the indication information and separated from the end time of the indication information by a second time interval.

Optionally, the second time interval is one or more transmission periods of the second configuration information, and/or one or more SSB transmission periods.

Optionally, a scheduling delay for the Msg3 comprises the second time interval.

Optionally, a configuration for the Msg3 is carried in the second configuration information.

Optionally, the Msg3 carries an SSB index.

Optionally, an occasion for the Msg3 corresponds to one SSB or a group of SSBs.

Optionally, a start time of the occasion for the Msg3 is obtained from an RAR message.

Optionally, the mapping between an SSB and a physical random access channel (PRACH) occasion/preamble in the second configuration information is the same as the mapping between an SSB and a PRACH occasion/preamble in the first configuration information; or

the second configuration information does not comprise mapping between an SSB and a PRACH occasion/preamble, and the network indicates the terminal device to use the mapping between an SSB and a PRACH occasion/preamble in the first configuration information;
the first configuration information is received before the second configuration information, and the first configuration information comprises configuration information for the first common uplink signal/channel and/or configuration information for the first common downlink signal/channel.

In the above "Scheme 3", the transmitting unit 701 is configured to transmit trigger information, the trigger information being used for determining activation of second configuration information, wherein the second configuration information comprises configuration information for a second common uplink signal/channel and/or configuration information for a second common downlink signal/channel.

It can be seen that in this application, the trigger information may be employed to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Thus, the terminal device transmits the second common uplink signal/channel and/or receives the second common downlink signal/channel based on activation of the second configuration information.

Optionally, the trigger information is carried in at least one of: SCell activation signaling, cell switch signaling.

It should be noted that specific implementations of various operations in the embodiment as shown in FIG. 7 may refer to the description in the above method embodiments, and details will not be repeated here.

### VI. Exemplary Description of a Terminal Device

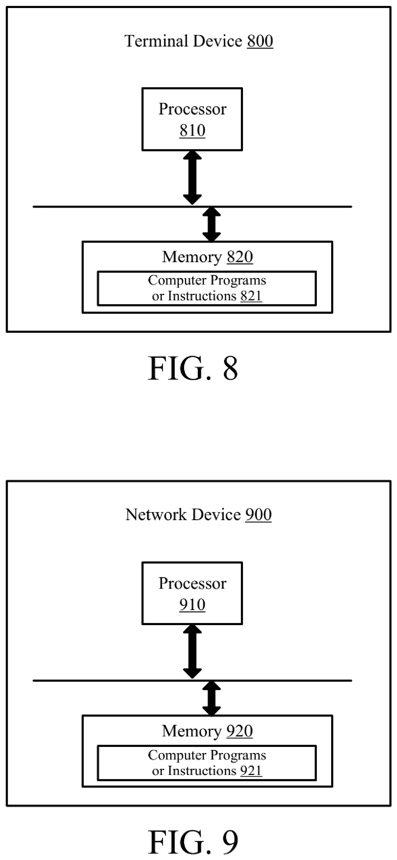

Referring to FIG. 8, FIG. 8 is a schematic structural diagram of a terminal device according to an embodiment of this application. The terminal device 800 may comprise a processor 810, a memory 820, and a communication bus for connecting the processor 810 and the memory 820.

Optionally, the memory 820 comprises, but is not limited to, a Random Access Memory (RAM), a Read-Only Memory (ROM), an Erasable Programmable Read-Only Memory (EPROM), or a Compact Disc Read-Only Memory (CD-ROM). The memory 820 is configured to store program codes executed by the terminal device 800 and transmitted data.

Optionally, the terminal device 800 further comprises a communication interface configured to receive and transmit data.Optionally, the processor 810 may be one or more central processing units (CPUs). When the processor 810 is one central processing unit (CPU), the central processing unit (CPU) may be a single-core CPU or a multi-core CPU.

Optionally, the processor 810 may be a baseband chip, a chip, a central processing unit (CPU), a general-purpose processor, a DSP, an ASIC, an FPGA, or other programmable logic devices, transistor logic devices, hardware components, or any combination thereof.In specific implementation, the processor 810 in the terminal device 800 is configured to execute computer programs or instructions 821 stored in the memory 820, to execute corresponding steps of the above method embodiments, and details will not be repeated here.In the above "Scheme 1", the processor 810 in the terminal device 800 is configured to execute computer programs or instructions 821 stored in the memory 820 to execute the following steps:receiving first configuration information, wherein the first configuration information comprises configuration information for a first common uplink signal/channel and/or configuration information for a first common downlink signal/channel.

It can be seen that in this application, the network configures the first common uplink signal/channel and/or the first common downlink signal/channel through the first configuration information. Also, when a cell (or network device) is in a first state, basic cell camping operations are supported for the terminal device via the first common downlink signal/channel and/or the first common uplink signal/channel.

In the above "Scheme 2", the processor 810 in the terminal device 800 is configured to execute computer programs or instructions 821 stored in the memory 820 to execute the following steps:
receiving indication information; and obtaining second configuration information according to the indication information, wherein the second configuration information comprises configuration information for a second common uplink signal/channel and/or configuration information for a second common downlink signal/channel.

It can be seen that in this application, the indication information may be used to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Also, the terminal device may obtain the second configuration information according to the indication information, which enables the network to configure the second common uplink signal/channel and/or the second common downlink signal/channel via the second configuration information.

In the above "Scheme 3", the processor 810 in the terminal device 800 is configured to execute computer programs or instructions 821 stored in the memory 820 to execute the following steps:
receiving trigger information;
determining activation of second configuration information according to the trigger information, wherein the second configuration information comprises configuration information for a second common uplink signal/channel and/or configuration information for a second common downlink signal/channel.

It can be seen that in this application, the trigger information may be used to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Thus, the terminal device transmits the second common uplink signal/channel and/or receives the second common downlink signal/channel based on activation of the second configuration information.

### VII. Exemplary Description of a Network Device

Referring to FIG. 9, FIG. 9 is a schematic structural diagram of a network device according to an embodiment of this application. The network device 900 may comprise a processor 910, a memory 920, and a communication bus for connecting the processor 910 and the memory 920.

Optionally, the memory 920 comprises, but is not limited to, a Random Access Memory (RAM), a Read-Only Memory (ROM), an Erasable Programmable Read-Only Memory (EPROM), or a Compact Disc Read-Only Memory (CD-ROM). The memory 920 is configured to store program codes executed by the network device 900 and transmitted data.

Optionally, the network device 900 further comprises a communication interface configured to receive and transmit data.

Optionally, the processor 910 may be one or more central processing units (CPUs). When the processor 910 is a central processing unit (CPU), the central processing unit (CPU) may be a single-core CPU or a multi-core CPU.

Optionally, the processor 910 may be a baseband chip, a chip, a central processing unit (CPU), a general-purpose processor, a DSP, an ASIC, an FPGA, or other programmable logic devices, transistor logic devices, hardware components, or any combination thereof.

In specific implementation, the processor 910 in the network device 900 is configured to execute computer programs or instructions 921 stored in the memory 920, so as to execute corresponding steps of the above method embodiments, and details will not be repeated here.

In the above "Scheme 1", the processor 910 in the network device 900 is configured to execute computer programs or instructions 921 stored in the memory 920 to execute the following steps:
transmitting first configuration information, wherein the first configuration information comprises configuration information for a first common uplink signal/channel and/or configuration information for a first common downlink signal/channel.

It can be seen that in this application, the network configures the first common uplink signal/channel and/or the first common downlink signal/channel through the first configuration information. Also, when a cell (or network device) is in a first state, downlink synchronization between the terminal device and the network device may be maintained via the first common downlink signal/channel, and uplink synchronization between the terminal device and the network device may be maintained via the first common uplink signal/channel.

In the above "Scheme 2", the processor 910 in the network device 900 is configured to execute computer programs or instructions 921 stored in the memory 920 to execute the following steps:
transmitting indication information, the indication information being used for obtaining second configuration information, wherein the second configuration information comprises configuration information for a second common uplink signal/channel and/or configuration information for a second common downlink signal/channel.

It can be seen that in this application, the indication information may be used to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Also, the terminal device may obtain the second configuration information according to the indication information, which enables the network to configure the second common uplink signal/channel and/or the second common downlink signal/channel via the second configuration information.

In the above "Scheme 3", the processor 910 in the network device 900 is configured to execute computer programs or instructions 921 stored in the memory 920 to execute the following steps:
transmitting trigger information, the trigger information being used for determining activation of second configuration information, wherein the second configuration information comprises configuration information for a second common uplink signal/channel and/or configuration information for a second common downlink signal/channel.

It can be seen that in this application, the trigger information may be used to indicate at least one of the following: the network agrees to transmit an on-demand common downlink signal/channel, the network agrees to receive an on-demand common uplink signal/channel, or the cell or the network device has transitioned from a first state to a second state, so that the network can respond to a request from the terminal device. Thus, the terminal device transmits the second common uplink signal/channel and/or receives the second common downlink signal/channel based on activation of the second configuration information.

### VIII. Other Related Exemplary Descriptions

Optionally, the above method embodiments may be applied to the network device or in the network device. That is, the above method embodiments may be executed by a network device, a chip, a chip module, a module, a transmitter of a network device, etc., which are not limited specifically herein.

The embodiments of this application also provide a chip, comprising a processor, a memory and computer programs or instructions stored on the memory, wherein the computer programs or instructions are executed by the processor to perform the steps described in the above method embodiments.

The embodiments of this application also provide a chip module, comprising a transceiver component and a chip, wherein the chip comprises a processor, a memory and computer programs or instructions stored on the memory, wherein the computer programs or instructions are executed by the processor to perform the steps described in the above method embodiments.

The embodiments of this application also provide a computer-readable storage medium storing computer programs or instructions thereon, wherein the computer programs or instructions, when being executed, perform the steps described in the above method embodiments.

The embodiments of this application also provide a computer program product, comprising computer programs or instructions, wherein the computer programs or instructions, when being executed, perform the steps described in the above method embodiments.

The embodiments of this application also provide a communication system, comprising the above network device and terminal device

It should be noted that the above embodiments are described as a combination of a series of actions for a brevity of description. Those skilled in the art should appreciate that this application is not limited by the described sequence of actions, as some steps in the embodiments of this application may be performed in other sequences or simultaneously. In addition, those skilled in the art should also appreciate that the embodiments described in the specification are all preferred embodiments, and not all the actions, steps, modules or units involved are required by the embodiments of this application.

In the above embodiments, the descriptions of the various embodiments in this application each emphasize different aspects. For portions not described in detail in a particular embodiment, reference may be made to the relevant descriptions in other embodiments.

The steps of methods or algorithms described in the embodiments of this application may be implemented in hardware, or may be implemented by a processor executing software instructions. The software instructions may consist of corresponding software modules, which may be stored in a RAM, a flash memory, a ROM, an EPROM, an erasable programmable ROM (EPROM), an electrically EPROM (EEPROM), a register, a hard disk, a portable hard disk, a compact disc read-only memory (CD-ROM), or any other form of storage medium known in the art. An exemplary storage medium is coupled to the processor, thereby enabling the processor to read information from the storage medium and write information to the storage medium. Certainly, the storage medium may also be an integral part of the processor. The processor and the storage medium may reside in an ASIC. Additionally, the ASIC may be located in a terminal device or a management device. Certainly, the processor and the storage medium may also exist as discrete components in a terminal device or a management device.

Those skilled in the art should appreciate that in one or more of the above examples, the functions described in the embodiments of this application may be implemented entirely or partially through software, hardware, firmware, or any combination thereof. When implemented through software, these functions may be entirely or partially implemented in the form of a computer program product. The computer program product includes one or more computer instructions. When the computer program instructions are loaded and executed on a computer, the processes or functions described in the embodiments of this application are entirely or partially generated. The computer may be a general-purpose computer, a special-purpose computer, a computer network, or other programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in wired manner (e.g., coaxial cable, optical fiber, digital subscriber line (DSL)) or in wireless manner (e.g., infrared, wireless, microwave, etc.). The computer-readable storage medium may be any available medium that can be accessed by a computer or a data storage device, such as a server or data center, integrating one or more available media. The available medium may be a magnetic medium (e.g., floppy disk, hard disk, magnetic tape), an optical medium (e.g., digital video disc (DVD)), or a semiconductor medium (e.g., solid state disk (SSD)), etc.

The various modules/units included in various apparatuses and products described in the above embodiments may be software modules/units, hardware modules/units, or partly software modules/units and partly hardware modules/units. For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated into the chip module, and the remaining (if any) modules/units may be implemented in hardware such as circuits; for apparatuses or products applied to or integrated into a terminal device, each module/unit included may be implemented in hardware such as circuits, different modules/units may be located in the same component (e.g., chip, circuit module, etc.) or different components of the terminal device, or at least some modules/units may be implemented by software programs executing on a processor integrated into the terminal device, and the remaining (if any) modules/units may be implemented in hardware such as circuits.

The specific implementations described above provide further detailed explanation regarding the objectives, technical solutions, and beneficial effects of the embodiments of this application. It should be understood that these descriptions are merely illustrative of specific implementations of the embodiments of this application and are not intended to limit the protection scope of the embodiments of this application. Any modifications, equivalent replacements, or improvements made based on the technical solutions of the embodiments of this application shall fall within the protection scope of the embodiments of this application.

## Claims

1. A communication method, **characterized in that**, the communication method comprises:
receiving first configuration information, wherein the first configuration information comprises configuration information for a first common uplink signal/channel and/or configuration information for a first common downlink signal/channel.

2. The method according to claim 1, **characterized in that**, after receiving the first configuration information, the method further comprises:
transmitting the first common uplink signal/channel, the first common uplink signal/channel requesting a cell to transition from a first state to a second state.

3. The method according to claim 2, **characterized in that**, the method further comprises:
starting a first timer upon completion of the transmission of the first common uplink signal/channel; or
starting a first timer upon initiation of the transmission of the first common uplink signal/channel.

4. A communication method, **characterized in that**, the communication method comprises:
transmitting first configuration information, wherein the first configuration information comprises configuration information for a first common uplink signal/channel and/or configuration information for a first common downlink signal/channel.

5. The method according to claim 4, **characterized in that**, after transmitting the first configuration information, the method further comprises:
receiving the first common uplink signal/channel, the first common uplink signal/channel requesting a cell to transition from a first state to a second state.

6. The method according to claim 2 or 5, **characterized in that**, the first state comprises at least one of: an OFF state, an energy-saving state, a sleep state, an inactive state or an inactive period;
the second state comprises at least one of: an ON state, a non-energy-saving state, a non-sleep state, an active state or an active period.

7. The method according to any one of claims 1 to 6, **characterized in that**, the first common uplink signal/channel is a reduced common uplink signal/channel;
the first common downlink signal/channel is a reduced common downlink signal/channel.

8. The method according to claim 7, **characterized in that**, the common downlink signal/channel comprises at least one of: a synchronization signal block (SSB), a channel state information reference signal (CSI-RS);
the common uplink signal/channel comprises at least one of: a physical random access channel (PRACH), a Message A, sounding reference signal (SRS).

9. A communication method, **characterized in that**, the communication method comprises:
receiving indication information;
obtaining second configuration information according to the indication information, wherein the second configuration information comprises configuration information for a second common uplink signal/channel and/or configuration information for a second common downlink signal/channel.

10. The method according to claim 9, **characterized in that**, the method further comprises:
based on reception of the indication information, transmitting the second common uplink signal/channel after a first time point.

11. The method according to claim 9, **characterized in that**, the method further comprises:
in response to expiration of a first timer and failure to receive the indication information, retransmitting the first common uplink signal/channel;
wherein the first timer is a timer started when a terminal device requests a cell to transition from a first state to a second state.

12. The method according to claim 9, **characterized in that**, the method further comprises:
based on reception of the indication information, transmitting Message 3 (Msg3) after a second time point.

13. A communication method, **characterized in that**, the communication method comprises:
transmitting indication information, the indication information being used for obtaining second configuration information, wherein the second configuration information comprises configuration information for a second common uplink signal/channel and/or configuration information for a second common downlink signal/channel.

14. The method according to claim 13, **characterized in that**, the method further comprises:
receiving the second common uplink signal/channel after a first time point.

15. The method according to claim 13, **characterized in that**, the method further comprises:
receiving a Msg3 after a second time point.

16. The method according to any one of claims 13 to 15, **characterized in that**, the indication information is carried in downlink control information (DCI) or a DCI format.

17. The method according to claim 16, **characterized in that**, the DCI or the DCI format includes a cyclic redundancy check (CRC) scrambled by a paging radio network temporary identifier (P-RNTI).

18. The method according to claim 16, **characterized in that**, the DCI or the DCI format includes a CRC scrambled by a random access radio network temporary identifier (RA-RNTI), and the DCI or the DCI format includes one or more bits reused for the indication information.

19. The method according to any one of claims 13 to 15, **characterized in that**, the DCI or the DCI format includes a CRC scrambled by RA-RNTI, and the DCI or the DCI format includes one or more reserved bits that are used to carry the indication information.

20. The method according to claim 10 or 14, **characterized in that**, the first time point is a time point after an end time of the indication information and separated from the end time of the indication information by a first time interval.

21. The method according to claim 20, **characterized in that**, the first time interval is one or more transmission periods of the second configuration information, and/or one or more SSB transmission periods.

22. The method according to claim 12 or 15, **characterized in that**, the second time point is a time point after an end time of the indication information and separated from the end time of the indication information by a second time interval.

23. The method according to claim 22, **characterized in that**, the second time interval is one or more transmission periods of the second configuration information, and/or one or more SSB transmission periods.

24. The method according to claim 22 or 23, **characterized in that**, a scheduling delay for the Msg3 comprises the second time interval.

25. The method according to claim 12 or 15, **characterized in that**, a configuration for the Msg3 is carried in the second configuration information.

26. The method according to any one of claims 12, 15 or 25, **characterized in that**, the Msg3 carries an SSB index.

27. The method according to any one of claims 12, 15, or 25 to 26, **characterized in that**, an occasion for the Msg3 corresponds to one SSB or a group of SSBs.

28. The method according to any one of claims 12, 15, or 25 to 27, **characterized in that**, a start time of the occasion for the Msg3 is obtained from an RAR message.

29. A communication method, **characterized in that**, the communication method comprises:
receiving trigger information;
determining activation of second configuration information according to the trigger information, wherein the second configuration information comprises configuration information for a second common uplink signal/channel and/or configuration information for a second common downlink signal/channel.

30. A communication method, **characterized in that**, the communication method comprises:
transmitting trigger information, the trigger information being used for determining activation of second configuration information, wherein the second configuration information comprises configuration information for a second common uplink signal/channel and/or configuration information for a second common downlink signal/channel.

31. The method according to claim 29 or 30, **characterized in that**, the trigger information is carried in at least one of: Secondary Cell (SCell) activation signaling, cell switch signaling.

32. A communication apparatus, **characterized in that**, the communication apparatus comprises:
a receiving unit configured to receive first configuration information, wherein the first configuration information comprises configuration information for a first common uplink signal/channel and/or configuration information for a first common downlink signal/channel.

33. The apparatus according to claim 32, **characterized in that**, the communication apparatus further comprises a transmitting unit configured to, after receiving the first configuration information:
transmit the first common uplink signal/channel, the first common uplink signal/channel requesting a cell to transition from a first state to a second state.

34. The apparatus according to claim 33, **characterized in that**, the communication apparatus further comprises a starting unit configured to:
start a first timer upon completion of the transmission of the first common uplink signal/channel; or
start a first timer upon initiation of the transmission of the first common uplink signal/channel.

35. A communication apparatus, **characterized in that**, the communication apparatus comprises:
a transmitting unit configured to transmit first configuration information, wherein the first configuration information comprises configuration information for a first common uplink signal/channel and/or configuration information for a first common downlink signal/channel.

36. The apparatus according to claim 35, **characterized in that**, the communication apparatus further comprises a receiving unit configured to, after transmitting the first configuration information:
receive the first common uplink signal/channel, the first common uplink signal/channel requesting a cell to transition from a first state to a second state.

37. The apparatus according to claim 33 or 36, **characterized in that**, the first state comprises at least one of: an OFF state, an energy-saving state, a sleep state, an inactive state or an inactive period;
the second state comprises at least one of: an ON state, a non-energy-saving state, a non-sleep state, an active state or an active period.

38. The apparatus according to any one of claims 32 to 37, **characterized in that**, the first common uplink signal/channel is a reduced common uplink signal/channel;
the first common downlink signal/channel is a reduced common downlink signal/channel.

39. The apparatus according to claim 38, **characterized in that**, the common downlink signal/channel comprises at least one of: a synchronization signal block (SSB), a channel state information reference signal (CSI-RS);
the common uplink signal/channel comprises at least one of: a physical random access channel (PRACH), a Message A, sounding reference signal (SRS).

40. The apparatus according to claim 38, **characterized in that**, the common downlink signal/channel comprises at least one of: a synchronization signal block (SSB), a channel state information reference signal (CSI-RS);
the common uplink signal/channel comprises at least one of: a physical random access channel (PRACH), a Message A, sounding reference signal (SRS).

41. A communication apparatus, **characterized in that**, the communication apparatus comprises:
a receiving unit configured to receive indication information, and obtain second configuration information according to the indication information, wherein the second configuration information comprises configuration information for a second common uplink signal/channel and/or configuration information for a second common downlink signal/channel.

42. The apparatus according to claim 41, **characterized in that**, the communication apparatus further comprises a transmitting unit configured to:
based on reception of the indication information, transmit the second common uplink signal/channel after a first time point.

43. The apparatus according to claim 41, **characterized in that**, the communication apparatus further comprises a transmitting unit configured to:
in response to expiration of a first timer and failure to receive the indication information, retransmit the first common uplink signal/channel;
wherein the first timer is a timer started when a terminal device requests a cell to transition from a first state to a second state.

44. The apparatus according to claim 41, **characterized in that**, the communication apparatus further comprises a transmitting unit configured to:
based on reception of the indication information, transmit Message 3 (Msg3) after a second time point.

45. A communication apparatus, **characterized in that**, the communication apparatus comprises:
a transmitting unit configured to transmit indication information, the indication information being used for obtaining second configuration information, wherein the second configuration information comprises configuration information for a second common uplink signal/channel and/or configuration information for a second common downlink signal/channel.

46. The apparatus according to claim 45, **characterized in that**, the communication apparatus further comprises a receiving unit configured to:
receive the second common uplink signal/channel after a first time point.

47. The apparatus according to claim 45, **characterized in that**, the communication apparatus further comprises a receiving unit configured to:
receive a Msg3 after a second time point.

48. The apparatus according to any one of claims 45 to 47, **characterized in that**, the indication information is carried in downlink control information (DCI) or a DCI format.

49. The apparatus according to claim 48, **characterized in that**, the DCI or the DCI format includes a cyclic redundancy check (CRC) scrambled by a paging radio network temporary identifier (P-RNTI).

50. The apparatus according to claim 48, **characterized in that**, the DCI or the DCI format includes a CRC scrambled by a random access radio network temporary identifier (RA-RNTI), and the DCI or the DCI format includes one or more bits reused for the indication information.

51. The apparatus according to any one of claims 45 to 47, **characterized in that**, the DCI or the DCI format includes a CRC scrambled by RA-RNTI, and the DCI or the DCI format includes one or more reserved bits that are used to carry the indication information.

52. The apparatus according to claim 42 or 46, **characterized in that**, the first time point is a time point after an end time of the indication information and separated from the end time of the indication information by a first time interval.

53. The apparatus according to claim 52, **characterized in that**, the first time interval is one or more transmission periods of the second configuration information, and/or one or more SSB transmission periods.

54. The apparatus according to claim 44 or 47, **characterized in that**, the second time point is a time point after an end time of the indication information and separated from the end time of the indication information by a second time interval.

55. The apparatus according to claim 54, **characterized in that**, the second time interval is one or more transmission periods of the second configuration information, and/or one or more SSB transmission periods.

56. The apparatus according to claim 54 or 55, **characterized in that**, a scheduling delay for the Msg3 comprises the second time interval.

57. The apparatus according to claim 44 or 47, **characterized in that**, a configuration for the Msg3 is carried in the second configuration information.

58. The apparatus according to any one of claims 44, 47 or 57, **characterized in that**, the Msg3 carries an SSB index.

59. The apparatus according to any one of claims 44, 47, or 57 to 58, **characterized in that**, an occasion for the Msg3 corresponds to one SSB or a group of SSBs.

60. The apparatus according to any one of claims 44, 47, or 57 to 59, **characterized in that**, a start time of the occasion for the Msg3 is obtained from an RAR message.

61. A communication apparatus, **characterized in that**, the communication apparatus comprises:
a receiving unit configured to receive trigger information;
a determining unit configured to determine activation of second configuration information according to the trigger information, wherein the second configuration information comprises configuration information for a second common uplink signal/channel and/or configuration information for a second common downlink signal/channel.

62. A communication apparatus, **characterized in that**, the communication apparatus comprises:
a transmitting unit configured to transmit trigger information, the trigger information being used for determining activation of second configuration information, wherein the second configuration information comprises configuration information for a second common uplink signal/channel and/or configuration information for a second common downlink signal/channel.

63. The apparatus according to claim 61 or 62, **characterized in that**, the trigger information is carried in at least one of: Secondary Cell (SCell) activation signaling, cell switch signaling.

64. A terminal device, comprising: a processor, a memory, and computer programs or instructions stored on the memory, **characterized in that**, the processor executes the computer programs or instructions to perform the steps of the method according to any one of claims 1 to 3, 6 to 12, 16 to 28, 29 and 31.

65. A network device, comprising: a processor, a memory, and computer programs or instructions stored on the memory, **characterized in that**, the processor executes the computer programs or instructions to perform the steps of the method according to any one of claims 4 to 5, 6 to 8, 13 to 28, and 30 to 31.

66. A chip, comprising a processor and a communication interface, **characterized in that**, the processor executes the steps of the method according to any one of claims 1 to 38.
